(19) Europäisches Patentamt
European Patent Office
Office européen des brevets

(11) EP 2 272 368 A1

(12) **EUROPÄISCHE PATENTANMELDUNG**

(43) Veröffentlichungstag:
**12.01.2011 Patentblatt 2011/02**

(21) Anmeldenummer: **10169148.3**

(22) Anmeldetag: **27.05.2006**

(51) Int Cl.:
***A01N 57/20*** *(2006.01)* ***A01N 43/28*** *(2006.01)*
***A01P 3/00*** *(2006.01)*

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.06.2005 DE 102005026482**

(62) Dokumentnummer(n) der früheren Anmeldung(en) nach Art. 76 EPÜ:
**06791516.5 / 1 893 024**

(71) Anmelder: **Bayer CropScience AG**
**40789 Monheim (DE)**

(72) Erfinder:
- **Stenzel, Klaus**
**40595 Düsseldorf (DE)**
- **Dollinger, Markus**
**51381 Leverkusen (DE)**
- **Dahmen, Peter**
**41470 Neuss (DE)**
- **Wachendorff-Neumann, Ulrike**
**56566 Neuwied (DE)**
- **Häuser-Hahn, Isolde**
**51375 Leverkusen (DE)**
- **Grosjean-Cournoyer, Marie-Claire**
**69250 Curis Au Mont D Or (FR)**
- **Leroux, Bernand**
**69480 Morance (FR)**
- **Sawada, Haruko**
**Ibaraki 307-0007 (JP)**
- **Hadano, Hiroyuki**
**329-0434 Tochigi (JP)**
- **Gouot, Jean-Marie**
**69450 Saint-Cyr au Mont d'OR (FR)**
- **Scherb, Christian**
**13.087.460 Apro 134**
**Chacara Primera Stad Campinas (ES)**

Bemerkungen:
Diese Anmeldung ist am 09-07-2010 als Teilanmeldung zu der unter INID-Code 62 erwähnten Anmeldung eingereicht worden.

(54) **Wirkstoffkombinationen**

(57) Die vorliegende Erfindung betrifft neue Wirkstoffkombinationen, die einerseits ein bekanntes Herbizid ausgewählt aus Glyphosate, Glufosinate oder Glufosinate-ammonium, und andererseits mindestens einen bekannten fungiziden Wirkstoff enthält und sehr gut zur Bekämpfung von unerwünschten phytopathogenen Pilzen, insbesondere Sojabohnen-Rost, geeignet sind. Besonders bevorzugt ist die Anwendung dieser Mischungen auf transgenen Pflanzen, die gegen die genannten Herbizide resistent sind.

EP 2 272 368 A1

## Beschreibung

Die vorliegende Erfindung betrifft neue Wirkstoffkombinationen, die einerseits ein bekanntes Herbizid ausgewählt aus Glyphosate, Glufosinate oder Glufosinate-ammonium, und andererseits mindestens einen bekannten fungiziden Wirkstoff enthält und sehr gut zur Bekämpfung von unerwünschten phytopathogenen Pilzen, insbesondere Sojabohnen-Rost, geeignet sind. Besonders bevorzugt ist die Anwendung dieser Mischungen auf transgenen Pflanzen, die gegen die genannten Herbizide resistent sind.

Es ist bereits bekannt, dass Glyphosate, Glufosinate und Glufosinate-ammonium herbizide Eigenschaften besitzen (vgl. DE-A 21 52 826, DE-A 27 17 440). Weiterhin ist bekannt, dass zahlreiche Carboxamide, Triazol-Derivate, Anilin-Derivate, Dicarboximide und andere Heterocyclen zur Bekämpfung von Pilzen eingesetzt werden können (vgl. WO 03/010149, DE-A 103 03 589, EP-A 0 040 345, DE-A 22 01 063, DE-A 23 24 010, Pesticide Manual, 9th. Edition (1991), Seiten 249 und 827, EP-A 0 382 375 und EP-A 0 515 901). Die Wirkung dieser Stoffe ist aber bei niedrigen Aufwandmengen nicht immer ausreichend. Ferner ist bereits bekannt, dass 1-(3,5-Dimethyl-isoxazol-4-sulfonyl)-2-chlor-6,6-difluor-[1,3]-dioxolo-[4,5f]-benzimidazol fungizide Eigenschaften besitzt (vgl. WO 97/06171). Schließlich ist auch bekannt, dass substituierte Halogenpyrimidine fungizide Eigenschaften besitzen (vgl. DE-A 196 46 407, EP-B-712 396).

Es wurden nun neue Wirkstoffkombinationen mit sehr guten fungiziden Eigenschaften gefunden, enthaltend

<u>Gruppe (1) ein Herbizid ausgewählt aus</u>

(1-1) Glyphosate (bekannt aus DE-A 21 52 826) der Formel

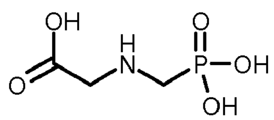

(1-2) Glufosinate (bekannt aus DE-A 27 17 440) der Formel

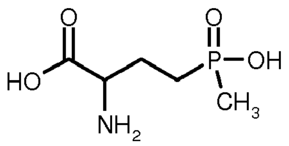

(1-3) Glufosinate-ammonium (bekannt aus Pesticide Manual, 13. Auflage, British Crop Protection Council, 2003, Seite 511-512) der Formel

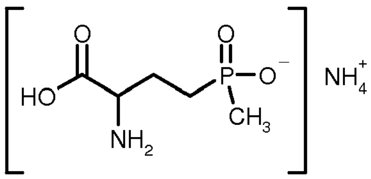

und mindestens einen Wirkstoff, der aus den folgenden Gruppen (2) bis (23) ausgewählt ist:

<u>Gruppe (2) Strobilurine ausgewählt aus</u>

(2-1) Azoxystrobin (bekannt aus EP-A 0 382 375) der Formel

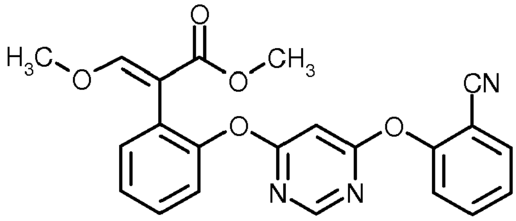

(2-2) Fluoxastrobin (bekannt aus DE-A 196 02 095) der Formel

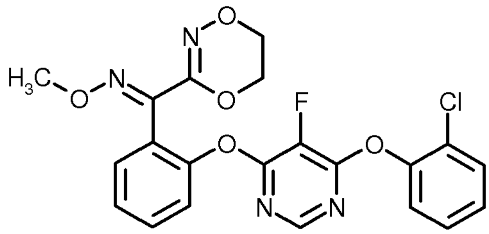

(2-3) (2*E*)-2-(2-{[6-(3-Chlor-2-methylphenoxy)-5-fluor-4-pyrimidinyl]oxy}phenyl)-2-(methoxyimino)-N-methylethanamid (bekannt aus DE-A 196 46 407) der Formel

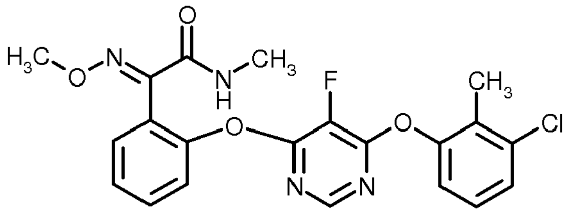

(2-4) Trifloxystrobin (bekannt aus EP-A 0 460 575) der Formel

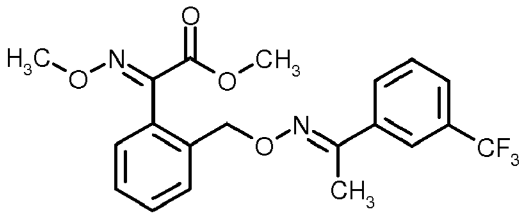

(2-5) (2*E*)-2-(Methoxyimino)-*N*-methyl-2-(2-{[({(1*E*)-1-[3-(trinuormethyl)phenyl]ethyliden}amino)-oxy]methyl} phenyl)ethanamid (bekannt aus EP-A 0 569 384) der Formel

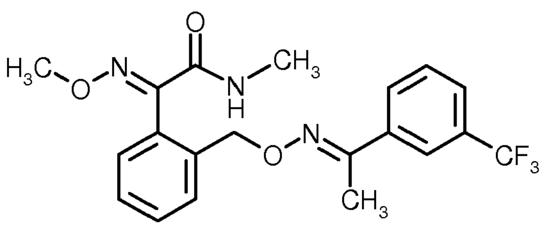

(2-6) (2*E*)-2-(Methoxyimino)-*N*-methyl-2-{2-[(*E*)-({1-[3-(trifluormethyl)phenyl]ethoxy}imino)-methyl]phenyl} ethanamid (bekannt aus EP-A 0 596 254) der Formel

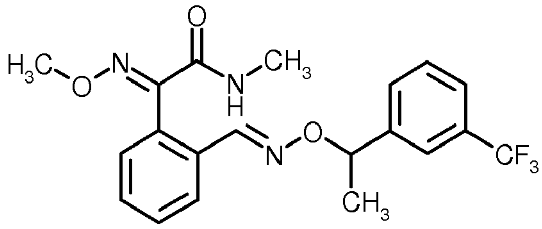

(2-7) Orysastrobin (bekannt aus DE-A 195 39 324) der Formel

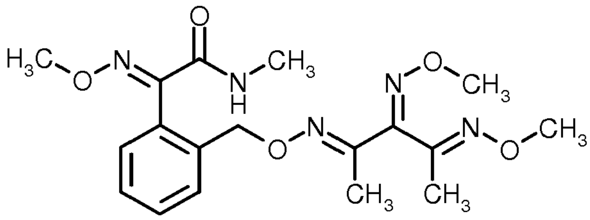

(2-8) 5-Methoxy-2-methyl-4-(2-{[({(1*E*)-1-[3-(trifluormethyl)phenyl]ethyliden}amino)oxy]methyl}-phenyl)-2,4-dihydro-3*H*-1,2,4-triazol-3-on (bekannt aus WO 98/23155) der Formel

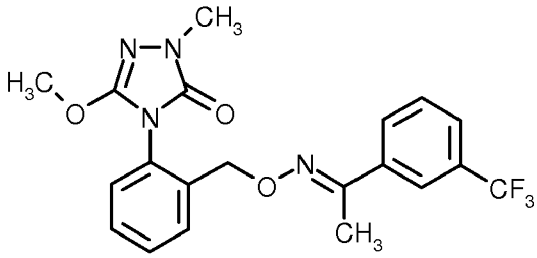

(2-9) Kresoxim-methyl (bekannt aus EP-A 0 253 213) der Formel

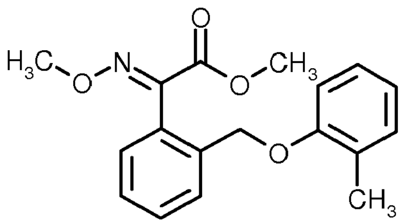

(2-10) Dimoxystrobin (bekannt aus EP-A 0 398 692) der Formel

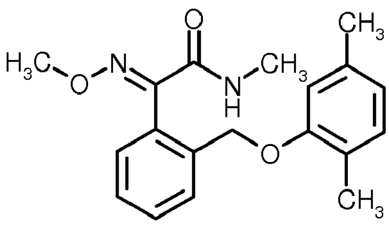

(2-11) Picoxystrobin (bekannt aus EP-A 0 278 595) der Formel

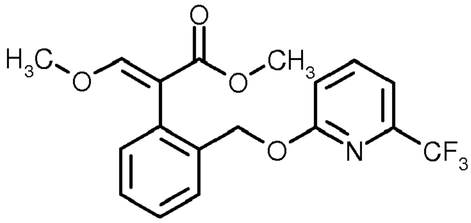

(2-12) Pyraclostrobin (bekannt aus DE-A 44 23 612) der Formel

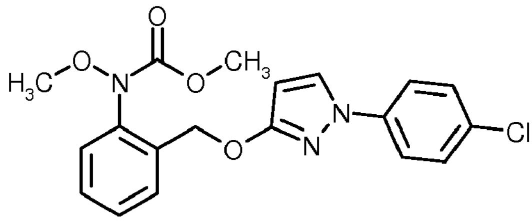

(2-13) Metominostrobin (bekannt aus EP-A 0 398 692) der Formel

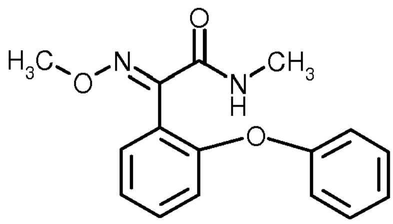

(2-14) (2E)-2-{2-[({[(1E)-1-(3-{[(E)-1-fluoro-2-phenylvinyl]oxy}phenyl)ethylidene]amino}oxy)methyl]-phenyl}-2-(methoxyimino)-N-methylacetamide (bekannt aus WO 01/12585) der Formel

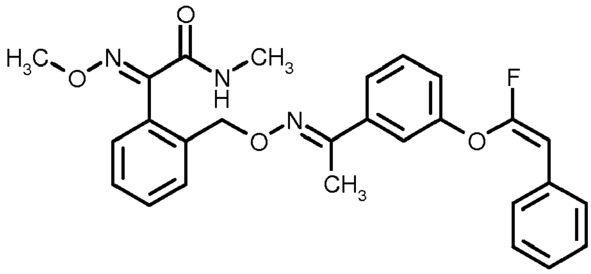

(2-15) Enestrobin (bekannt aus EP-A 0 936 213) der Formel

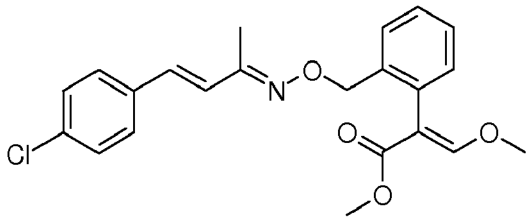

Gruppe (3) Triazole ausgewählt aus

(3-1) Azaconazole (bekannt aus DE-A 25 51 560) der Formel

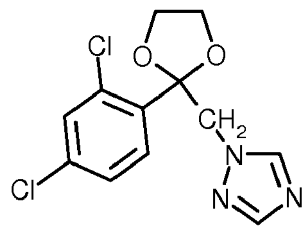

(3-2) Etaconazole (bekannt aus DE-A 25 51 560) der Formel

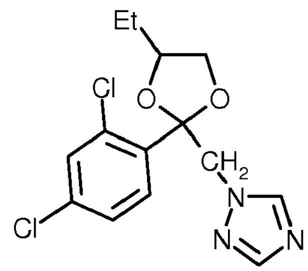

(3-3) Propiconazole (bekannt aus DE-A 25 51 560) der Formel

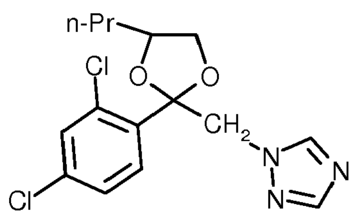

(3-4) Difenoconazole (bekannt aus EP-A 0 112 284) der Formel

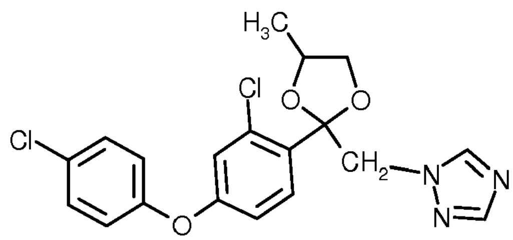

(3-5) Bromuconazole (bekannt aus EP-A 0 258 161) der Formel

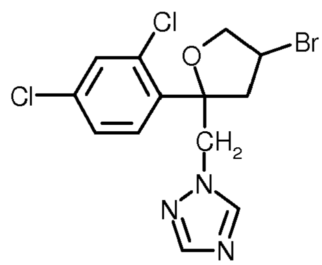

(3-6) Cyproconazole (bekannt aus DE-A 34 06 993) der Formel

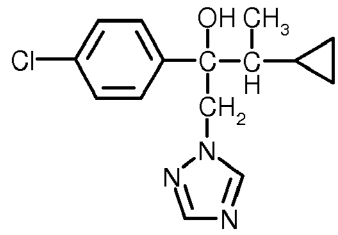

(3-7) Hexaconazole (bekannt aus DE-A 30 42 303) der Formel

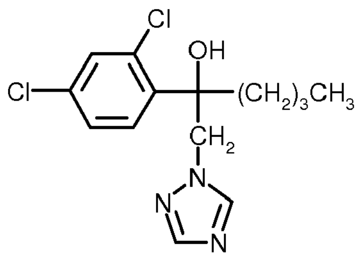

(3-8) Penconazole (bekannt aus DE-A 27 35 872) der Formel

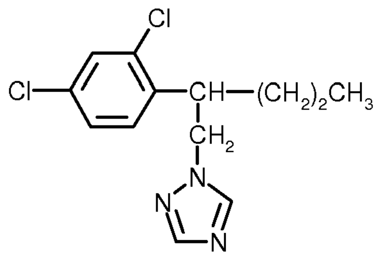

(3-9) Myclobutanil (bekannt aus EP-A 0 145 294) der Formel

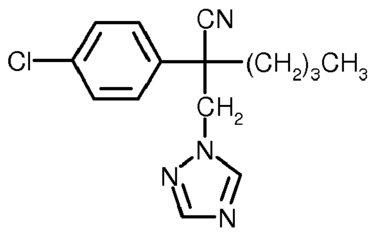

(3-10) Tetraconazole (bekannt aus EP-A 0 234 242) der Formel

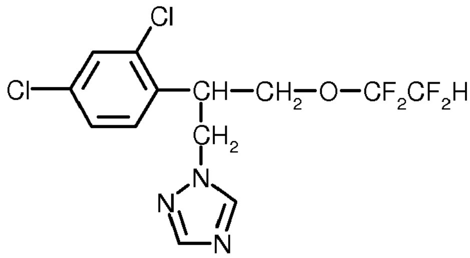

(3-11) Flutriafol (bekannt aus EP-A 0 015 756) der Formel

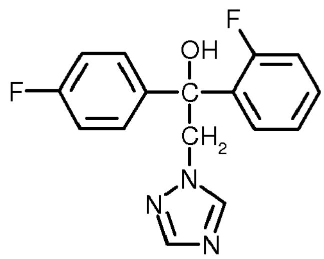

(3-12) Epoxiconazole (bekannt aus EP-A 0 196 038) der Formel

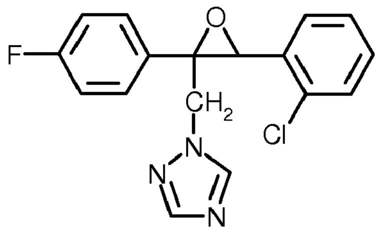

(3-13) Flusilazole (bekannt aus EP-A 0 068 813) der Formel

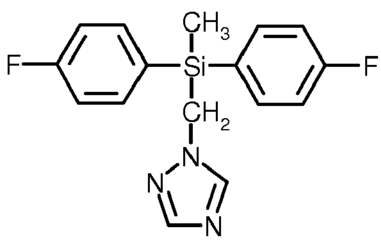

(3-14) Simeconazole (bekannt aus EP-A 0 537 957) der Formel

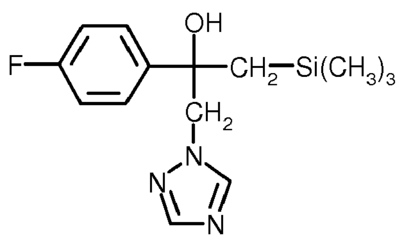

(3-15) Prothioconazole (bekannt aus WO 96/16048) der Formel

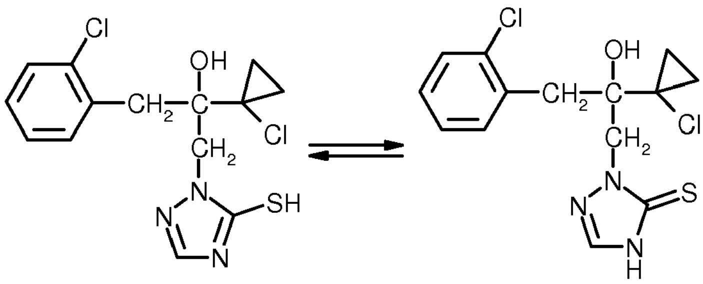

(3-16) Fenbuconazole (bekannt aus DE-A 37 21 786) der Formel

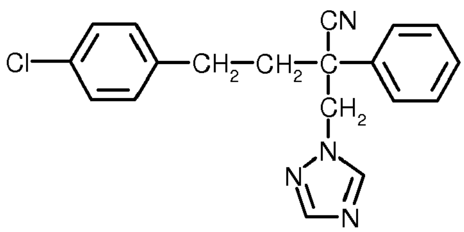

(3-17) Tebuconazole (bekannt aus EP-A 0 040 345) der Formel

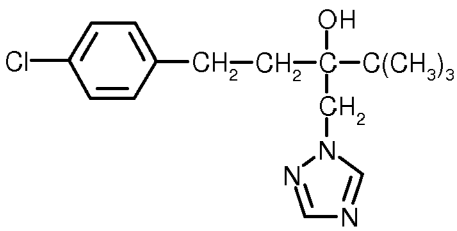

(3-18) Ipconazole (bekannt aus EP-A 0 329 397) der Formel

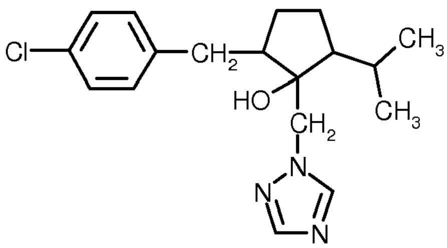

(3-19) Metconazole (bekannt aus EP-A 0 329 397) der Formel

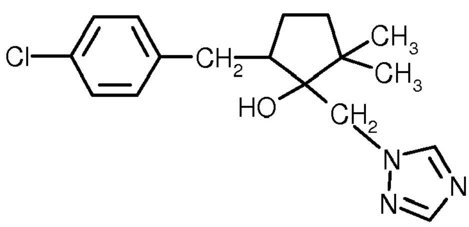

(3-20) Triticonazole (bekannt aus EP-A 0 378 953) der Formel

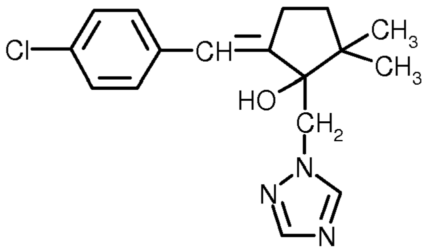

(3-21) Bitertanol (bekannt aus DE-A 23 24 010) der Formel

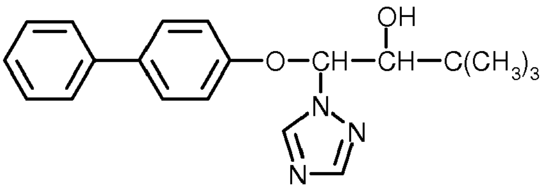

(3-22) Triadimenol (bekannt aus DE-A 23 24 010) der Formel

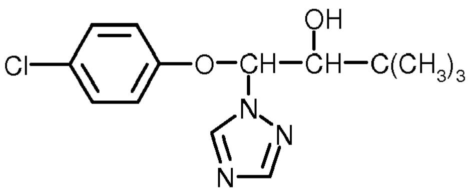

(3-23) Triadimefon (bekannt aus DE-A 22 01 063) der Formel

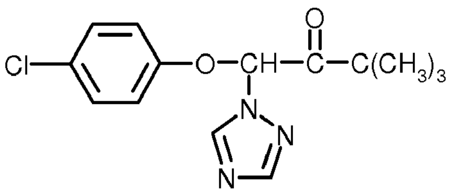

(3-24) Fluquinconazole (bekannt aus EP-A 0 183 458) der Formel

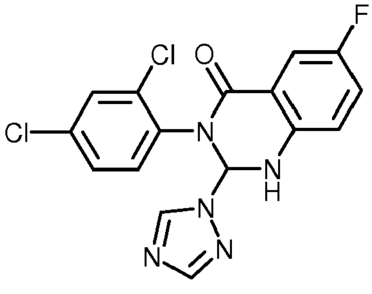

(3-25) Quinconazole (bekannt aus EP-A 0 183 458) der Formel

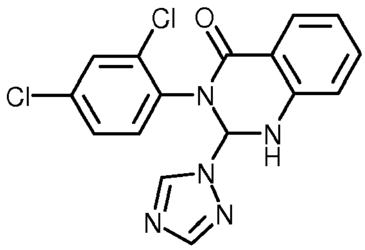

(3-26) Amisulbrom (bekannt aus JP-A 2001-187786) der Formel

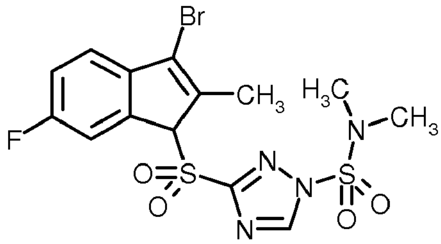

<u>Gruppe (4) Sulfenamide/Sulfonamide ausgewählt aus</u>

(4-1) Dichlofluanid (bekannt aus DE-A 11 93 498) der Formel

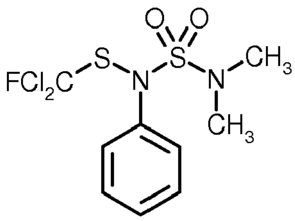

(4-2) Tolylfluanid (bekannt aus DE-A 11 93 498) der Formel

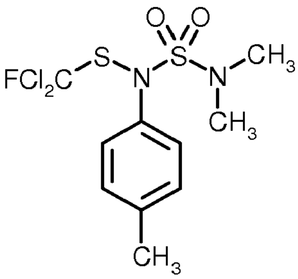

(4-3) N-(4-Chlor-2-nitrophenyl)N-ethyl-4-methyl-benzolsulfonamid (bekannt aus WO 00/659513) der Formel

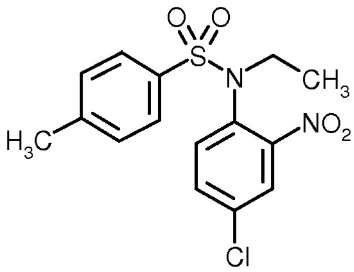

Gruppe (5) Valinamide ausgewählt aus

(5-1) Iprovalicarb (bekannt aus DE-A 40 26 966) der Formel

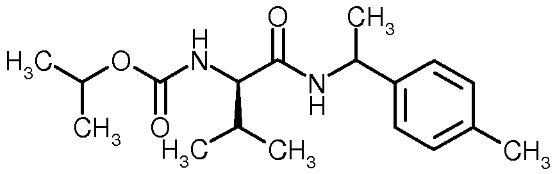

(5-2) *N*[1]-[2-(4-{[3-(4-chlorophenyl)-2-propynyl]oxy}-3-methoxyphenyl)ethyl]-*N*[2]-(methylsulfonyl)-L-valinamid

(5-3) Benthiavalicarb (bekannt aus WO 96/04252) der Formel

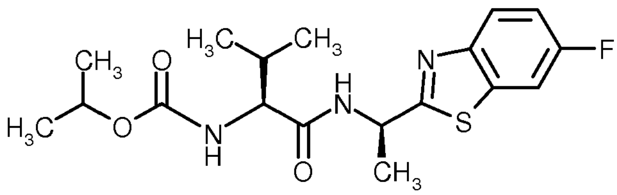

Gruppe (6) Carboxamide ausgewählt aus

(6-1) *N*-[2-(1,3-Dimethylbutyl)phenyl]-1,3-dimethyl-1*H*-pyrazol-4-carboxamid (bekannt aus JP-A 10-251240) der Formel

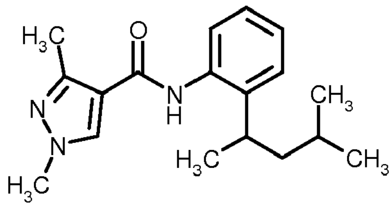

(6-2) *N*-[2-(1,3-Dimethylbutyl)phenyl]-5-fluor-1,3-dimethyl-1*H*-pyrazol-4-carboxamid (bekannt aus WO 03/010149) der Formel

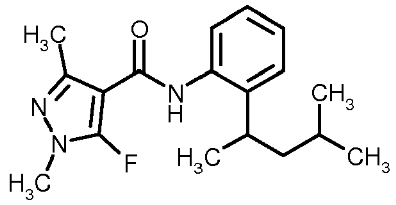

(6-3) *N*-[2-(1,3-Dimethylbutyl)phenyl]-5-chlor-1,3-dimethyl-1*H*-pyrazol-4-carboxamid (bekannt aus JP-A 10-251240) der Formel

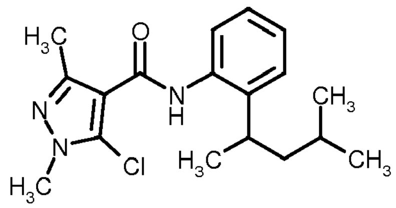

(6-4) 3-(Difluormethyl)-*N*-[2-(1,3-dimethylbutyl)phenyl]-1-methyl-1*H*-pyrazol-4-carboxamid der Formel

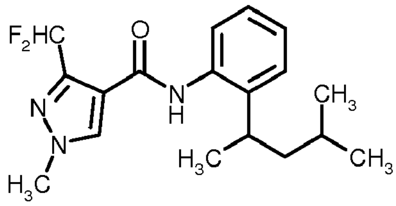

(6-5) 3-(Trifluormethyl)-*N*-[2-(1,3-dimethylbutyl)phenyl]-5-fluor-1-methyl-1*H*-pyrazol-4-carboxamid (bekannt aus WO 2004/067515) der Formel

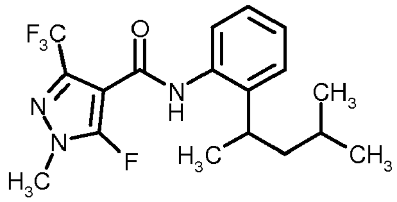

(6-6) 3-(Trifluormethyl)-*N*-[2-(1,3-dimethylbutyl)phenyl]-5-chlor-1-methyl-1*H*-pyrazol-4-carboxamid (bekannt aus JP-A 10-251240) der Formel

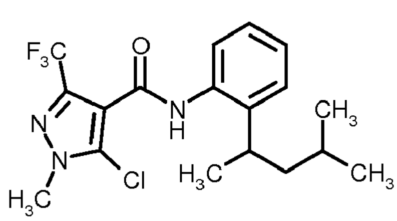

(6-7) 1,3-Dimethyl-*N*-[2-(1,3,3-trimethylbutyl)phenyl]-1*H*-pyrazol-4-carboxamid der Formel

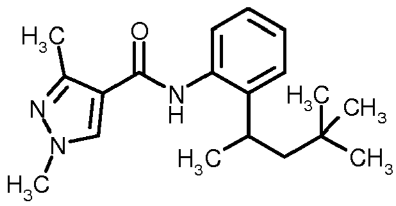

(6-8) 5-Fluor-1,3-dimethyl-*N*-[2-(1,3,3-trimethylbutyl)phenyl]-1*H*-pyrazol-4-carboxamid (bekannt aus WO 03/010149) der Formel

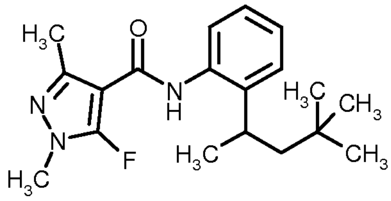

(6-9) 3-(Difluormethyl)-1-methyl-*N*-[2-(1,3,3-trimethylbutyl)phenyl]-1*H*-pyrazol-4-carboxamid der Formel

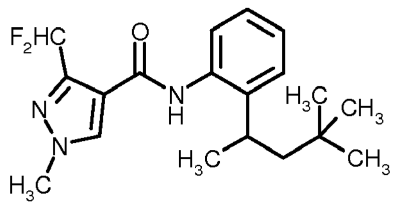

(6-10) 3-(Trifluormethyl)-1-methyl-*N*-[2-(1,3,3-trimethylbutyl)phenyl]-1*H*-pyrazol-4-carboxamid der Formel

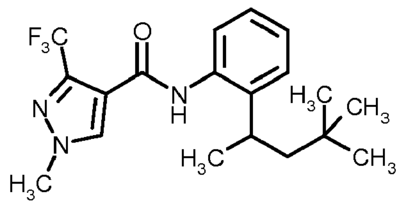

(6-11) 3-(Trifluormethyl)-5-fluor-1-methyl-*N*-[2-(1,3,3-trimethylbutyl)phenyl]-1*H*-pyrazol-4-carboxamid (bekannt aus WO 2004/067515) der Formel

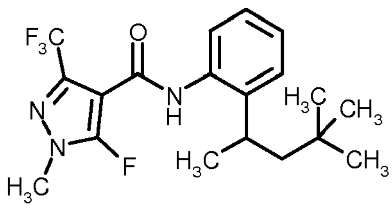

(6-12) 3-(Trifluormethyl)-5-chlor-1-methyl-*N*-[2-(1,3,3-trimethylbutyl)phenyl]-1*H*-pyrazol-4-carboxamid der Formel

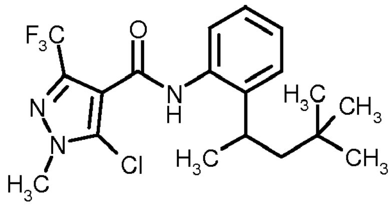

(6-13) *N*-[2-(1,3-Dimethylbutyl)phenyl]-2-iodbenzamid (bekannt aus WO 2004/005242) der Formel

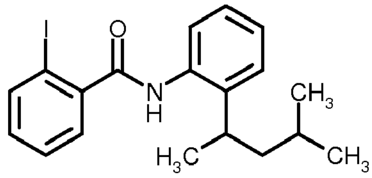

(6-14) 2-Iod-*N*-[2-(1,3,3-trimethylbutyl)phenyl]benzamid (bekannt aus WO 2004/005242) der Formel

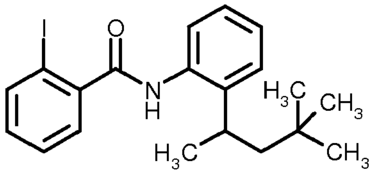

(6-15) *N*-[2-(1,3-Dimethylbutyl)phenyl]-2-(trifluormethyl)benzamid (bekannt aus WO 2004/005242) der Formel

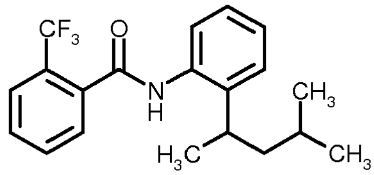

(6-16) 2-(Trifluormethyl)-*N*-[2-(1,3,3-trimethylbutyl)phenyl]benzamid (bekannt aus WO 2004/005242) der Formel

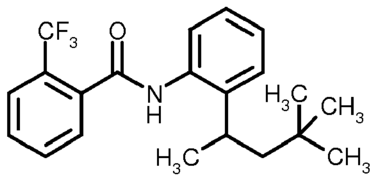

(6-17) 2-Chloro-N-(1,1,3-trimethyl-indan-4-yl)-nicotinamid (bekannt aus EP-A 0 256 503) der Formel

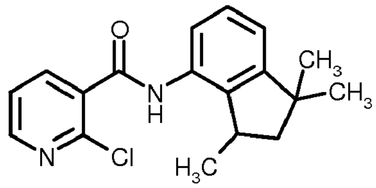

(6-18) Boscalid (bekannt aus DE-A 195 31 813) der Formel

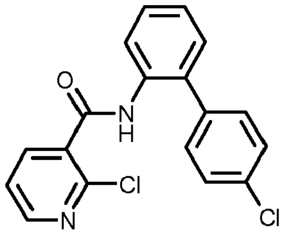

(6-19) Furametpyr (bekannt aus EP-A 0 315 502) der Formel

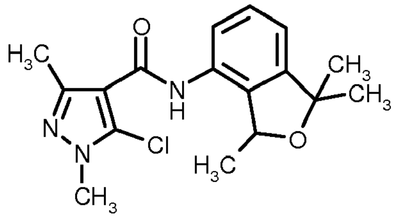

(6-20) 1-Methyl-3-trifluormethyl-1H-pyrazol-4-carbonsäure-(3-p-tolyl-thiophen-2-yl)-amid (bekannt aus EP-A 0 737 682) der Formel

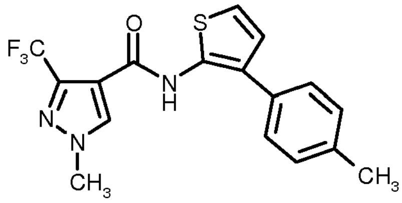

(6-21) Penthiopyrad (bekannt aus EP-A 0 737 682) der Formel

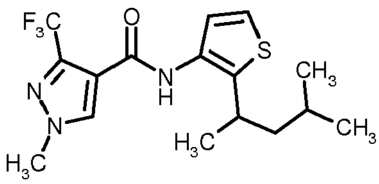

(6-22) *N*-[2-(1,3-Dimethylbutyl)phenyl]-1-methyl-4-(trifluormethyl)-1*H*-pyrrol-3-carboxamid (bekannt aus WO 02/38542) der Formel

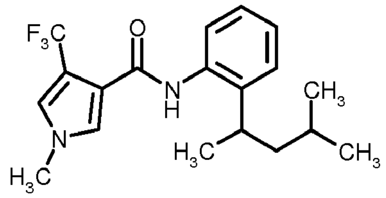

(6-23) *N*-(3',4'-Dichlor-5-fluor-1,1'-biphenyl-2-yl)-3-(difluormethyl)-1-methyl-1*H*-pyrazol-4-carboxamid (bekannt aus WO 03/070705) der Formel

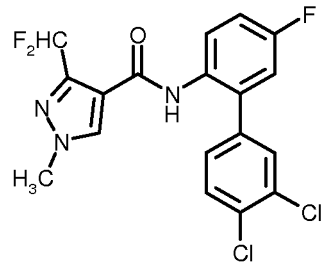

(6-24) 3-(Difluormethyl)-*N*-{3'-fluor-4'-[(*E*)-(methoxyimino)methyl]-1,1'-biphenyl-2-yl}-1-methyl-1*H*-pyrazol-4-carboxamid (bekannt aus WO 02/08197) der Formel

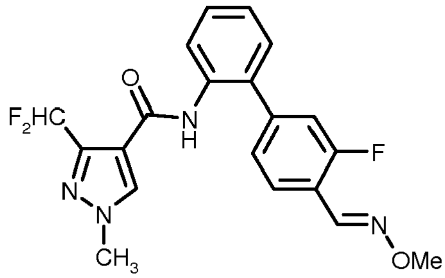

(6-25) 3-(Trifluormethyl)-*N*-13'-fluor-4'-[(*E*)-(methoxyimino)methyl]-1,1'-biphenyl-2-yl}-1-methyl-1*H*-pyrazol-4-carboxamid (bekannt aus WO 02/08197) der Formel

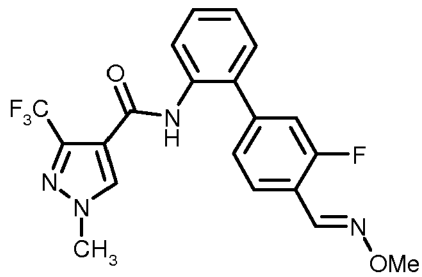

(6-26) *N*-(3',4'-Dichlor-1,1'-biphenyl-2-yl)-5-fluor-1,3-dimethyl-1*H*-pyrazol-4-carboxamid (bekannt aus WO 00/14701) der Formel

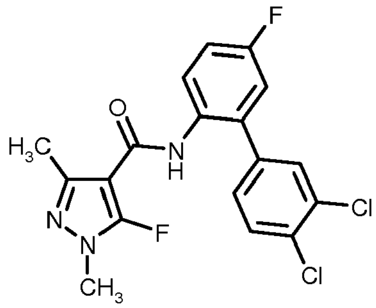

(6-27) *N*-(4'-Chlor-3'-fluor-1,1'-biphenyl-2-yl)-2-methyl-4-(trifluormethyl)-1,3-thiazol-5-carboxamid (bekannt aus WO 03/066609) der Formel

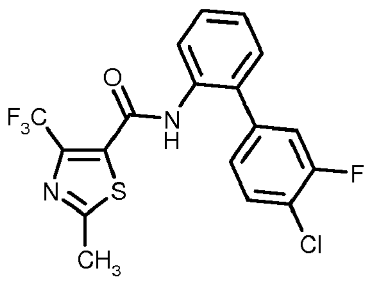

(6-28) *N*-(4'-Chlor-1,1'-biphenyl-2-yl)-4-(difluormethyl)-2-methyl-1,3-thiazol-5-carboxamid (bekannt aus WO 03/066610) der Formel

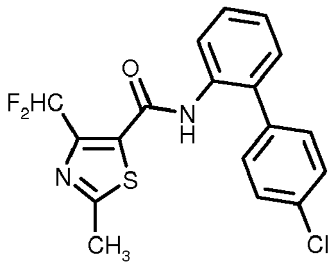

(6-29) *N*-(4'-Brom-1,1'-biphenyl-2-yl)-4-(difluormethyl)-2-methyl-1,3-thiazol-5-carboxamid (bekannt aus WO 03/066610) der Formel

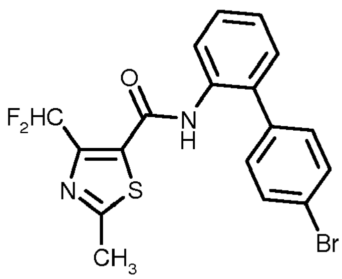

(6-30) 4-(Difluormethyl)-2-methyl-*N*-[4'-(trifluormethyl)-1,1'-biphenyl-2-yl]-1,3-thiazol-5-carboxamid (bekannt aus WO 03/066610) der Formel

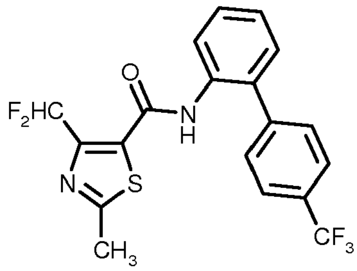

(6-31) *N*-(4'-Iod-1,1'-biphenyl-2-yl)-4-(difluormethyl)-2-methyl-1,3-thiazol-5-carboxamid (bekannt aus WO 03/066610) der Formel

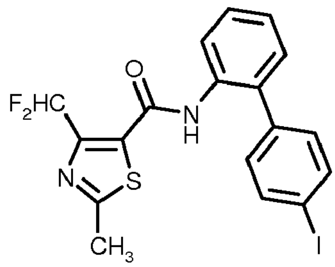

(6-32) *N*-(4'-Chlor-3'-fluor-1,1'-biphenyl-2-yl)-2-methyl-4-(difluormethyl)-1,3-thiazol-5-carboxamid (bekannt aus WO 03/066610) der Formel

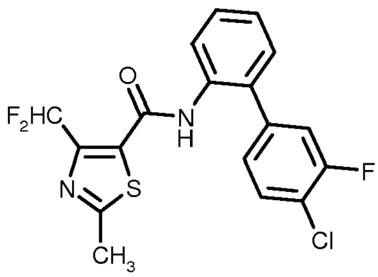

(6-33) Ethaboxam (bekannt aus EP-A 0 639 574) der Formel

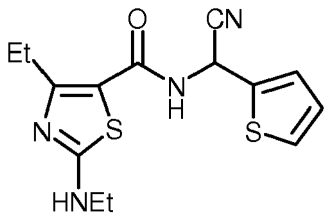

(6-34) Fenhexamid (bekannt aus EP-A 0 339 418) der Formel

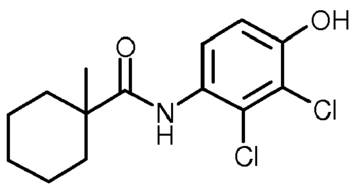

(6-35) Carpropamid (bekannt aus EP-A 0 341 475) der Formel

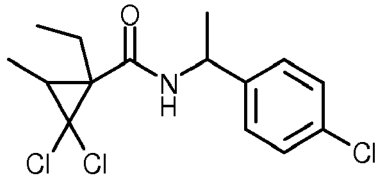

(6-36) 2-Chlor-4-(2-fluor-2-methyl-propionylamino)-N,N-dimethyl-benzamid (bekannt aus EP-A 0 600 629) der Formel

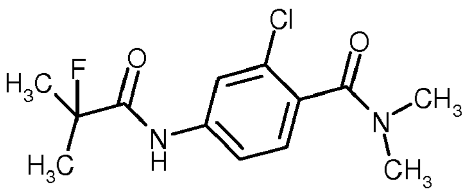

(6-37) Fluopicolide(bekannt aus WO 99/42447) der Formel

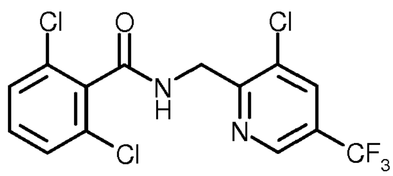

(6-38) Zoxamide (bekannt aus EP-A 0 604 019) der Formel

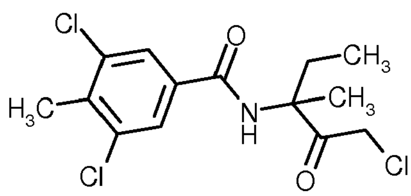

(6-39) 3,4-Dichlor-N-(2-cyanophenyl)isothiazol-5-carboxamid (bekannt aus WO 99/24413) der Formel

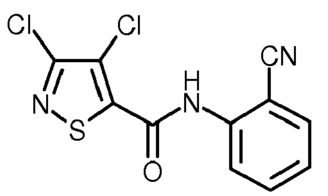

(6-40) Carboxin (bekannt aus US 3,249,499) der Formel

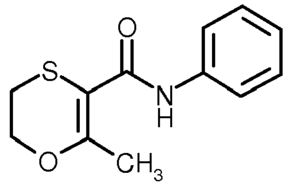

(6-41) Tiadinil (bekannt aus US 6,616,054) der Formel

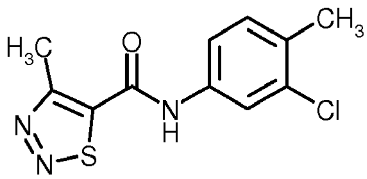

(6-42) Silthiofam (bekannt aus WO 96/18631) der Formel

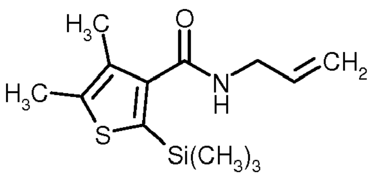

(6-43) *N*-[2-(1,3-Dimethylbutyl)phenyl]-1-methyl-4-(trifluormethyl)-1*H*-pyrrol-3-carboxamid (bekannt aus WO 02/38542) der Formel

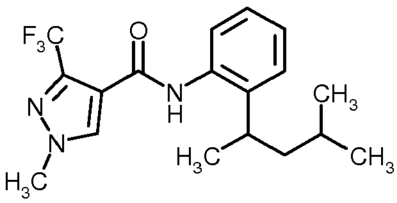

(6-44) *N*-{2-[3-Chlor-5-(trifluormethyl)pyridin-2-yl]ethyl}-2-(trifluormethyl)benzamid (bekannt aus WO 2004/016088) der Formel

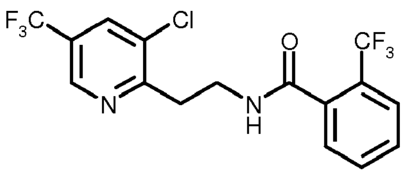

(6-45) 1-Methyl-3-trifluormethyl-1H-pyrazol-4-carbonsäure-(2-bicyclopropyl-2-yl-phenyl)-amid (bekannt aus WO 2006/015865) der Formel

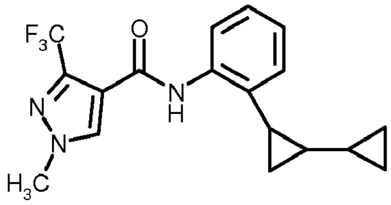

(6-46) 1-Methyl-3-difluormethyl-1H-pyrazol-4-carbonsäure-(2-bicyclopropyl-2-yl-phenyl)-amid (bekannt aus WO 2006/015865) der Formel

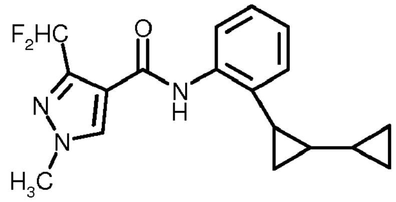

(6-47) 1-Methyl-3-trifluormethyl-1H-pyrazol-4-carbonsäure-[2-(1'-methyl-bicyclopropyl-2-yl)-phenyl]-amid (bekannt aus WO 2006/015865) der Formel

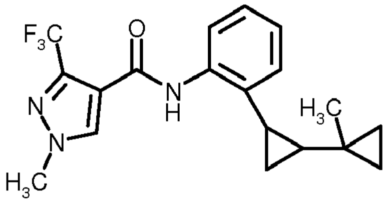

(6-48) 1-Methyl-3-difluormethyl-1H-pyrazol-4-carbonsäure-[2-(1'-methyl-bicyclopropyl-2-yl)-phenyl]-amid (bekannt aus WO 2006/015865) der Formel

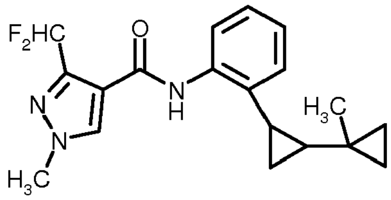

(6-49) N-[1-(5-Brom-3-chlorpyridin-2-yl)ethyl]-2,4-dichlornicotinamid der Formel

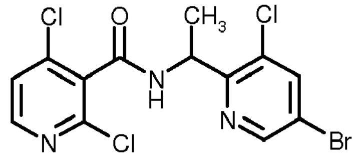

(6-50) N-(5-Brom-3-chlorpyridin-2-yl)methyl-2,4-dichlornicotinamid der Formel

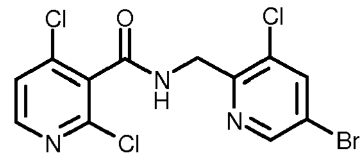

(6-51) *N*-(3',4'-Dichlor-5-fluor-1,1'-biphenyl-2-yl)-3-(difluormethyl)-1-methyl-1*H*-pyrazol-4-carboxamid (bekannt aus WO 2005/123690) der Formel

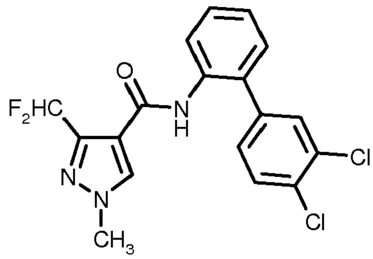

(6-52) *N*-(3',4'-Dichlor-5-fluor-1,1'-biphenyl-2-yl)-3-(difluormethyl)-1-methyl-1*H*-pyrazol-4-carboxamid (bekannt aus WO 2005/123689) der Formel

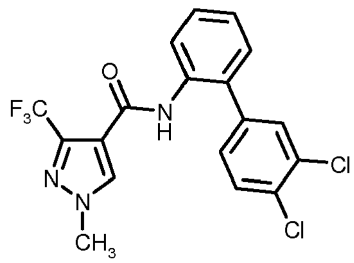

(6-53) 3-Difluormethyl-1-methyl-1H-pyrazol-4-carbonsäure[2-(3,3-dimethyl-butyl)-phenyl]-amid der Formel

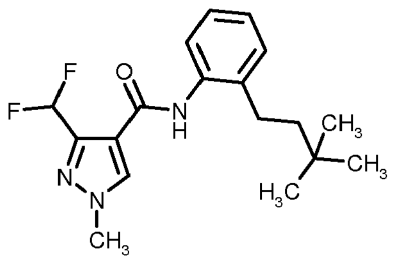

<u>Gruppe (7) Dithiocarbamate ausgewählt aus</u>

(7-1) Mancozeb (bekannt aus DE-A 12 34 704) mit dem IUPAC-Namen Manganese ethylenebis(dithiocarbamate) (polymeric) complex with zinc salt
(7-2) Maneb (bekannt aus US 2,504,404) der Formel

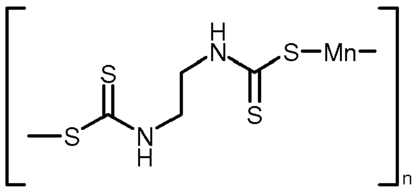

(7-3) Metiram (bekannt aus DE-A 10 76 434) mit dem IUPAC-Namen Zinc ammoniate ethylenebis(dithiocarbamate) - poly(ethylenethiuram disulfide)
(7-4) Propineb (bekannt aus GB 935 981) der Formel

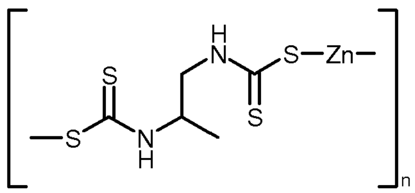

(7-5) Thiram (bekannt aus US 1,972,961) der Formel

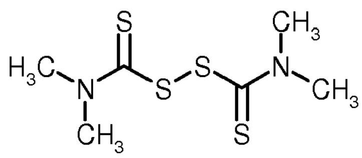

(7-6) Zineb (bekannt aus DE-A 10 81446) der Formel

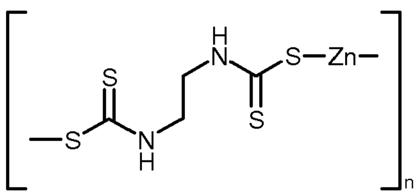

(7-7) Ziram (bekannt aus US 2,588,428) der Formel

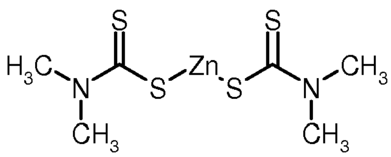

<u>Gruppe (8) Acylalanine ausgewählt aus</u>

(8-1) Benalaxyl (bekannt aus DE-A 29 03 612) der Formel

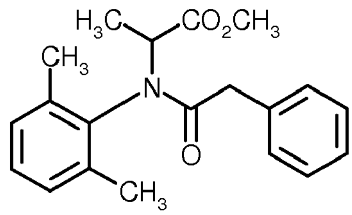

(8-2) Furalaxyl (bekannt aus DE-A 25 13 732) der Formel

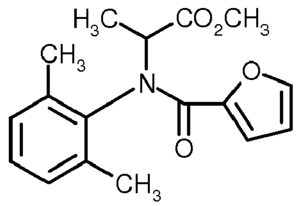

(8-3) Metalaxyl (bekannt aus DE-A 25 15 091) der Formel

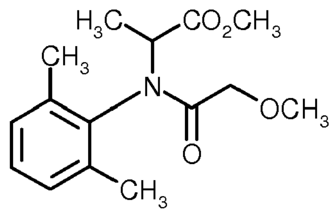

(8-4) Metalaxyl-M (bekannt aus WO 96/01559) der Formel

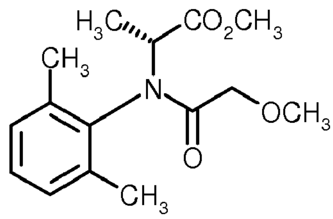

(8-5) Benalaxyl-M der Formel

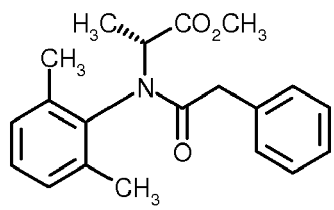

Gruppe (9): Anilino-pyrimidine ausgewählt aus

(9-1) Cyprodinil (bekannt aus EP-A 0 310 550) der Formel

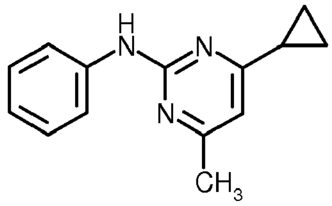

(9-2) Mepanipyrim (bekannt aus EP-A 0 270 111) der Formel

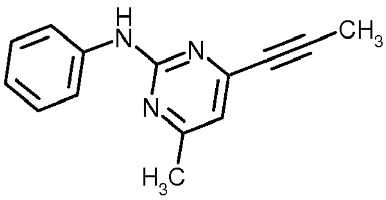

(9-3) Pyrimethanil (bekannt aus DD 151 404) der Formel

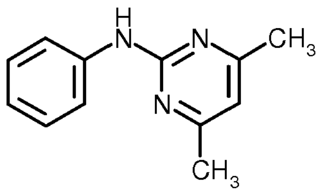

Gruppe (10): Benzimidazole ausgewählt aus

(10-1) 6-Chlor-5-[(3,5-dimethylisoxazol-4-yl)sulfonyl]-2,2-difluor-5H-[1,3]dioxolo[4,5-f]benzimidazol (bekannt aus WO 97/06171) der Formel

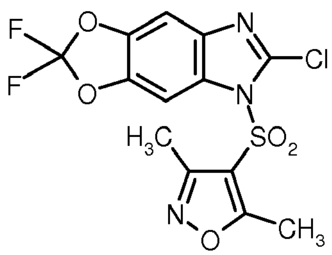

(10-2) Benomyl (bekannt aus US 3,631,176) der Formel

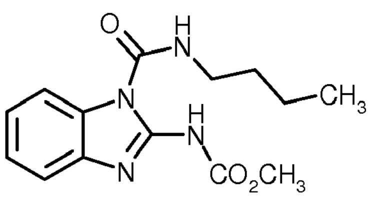

(10-3) Carbendazim (bekannt aus US 3,010,968) der Formel

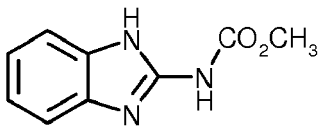

(10-4) Chlorfenazole der Formel

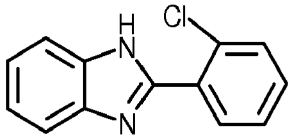

(10-5) Fuberidazole (bekannt aus DE-A 12 09 799) der Formel

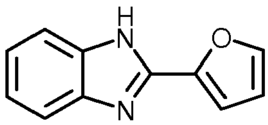

(10-6) Thiabendazole (bekannt aus US 3,206,468) der Formel

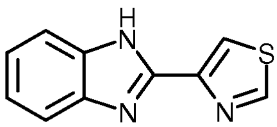

Gruppe (11): Carbamate ausgewählt aus

(11-1) Diethofencarb (bekannt aus EP-A 0 078 663) der Formel

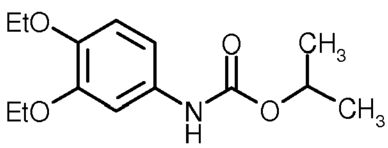

(11-2) Propamocarb (bekannt aus US 3,513,241) der Formel

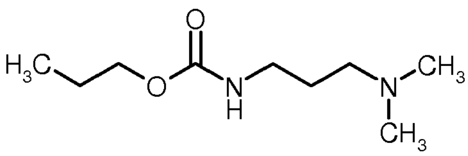

(11-3) Propamocarb-hydrochloride (bekannt aus US 3,513,241) der Formel

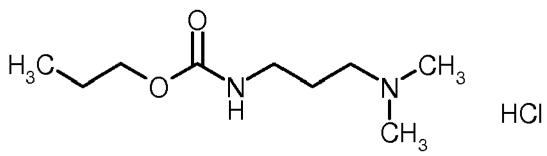

(11-4) Propamocarb-Fosetyl der Formel

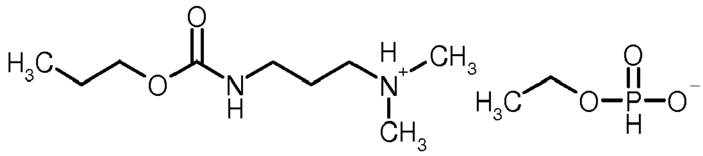

Gruppe (12): Dicarboximide ausgewählt aus

(12-1) Captafol (bekannt aus US 3,178,447) der Formel

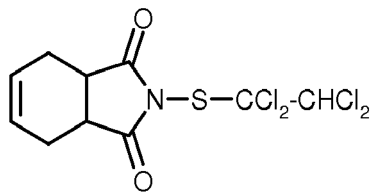

(12-2) Captan (bekannt aus US 2,553,770) der Formel

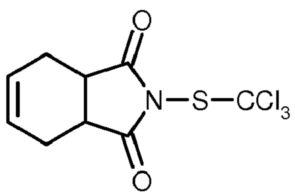

(12-3) Folpet (bekannt aus US 2,553,770) der Formel

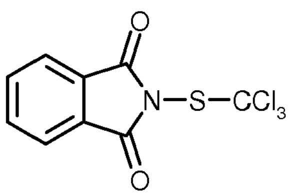

(12-4) Iprodione (bekannt aus DE-A 21 49 923) der Formel

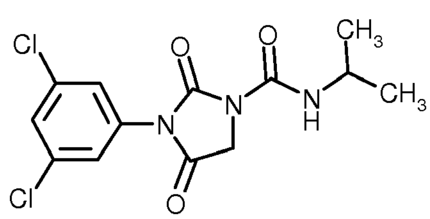

(12-5) Procymidone (bekannt aus DE-A 20 12 656) der Formel

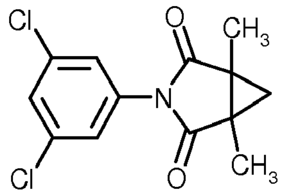

(12-6) Vinclozolin (bekannt aus DE-A 22 07 576) der Formel

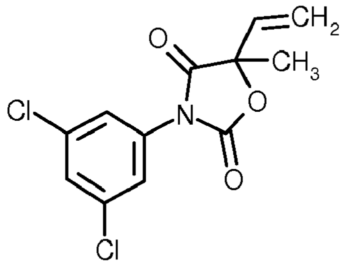

Gruppe (13): Guanidine ausgewählt aus

(13-1) Dodine (bekannt aus GB 11 03 989) der Formel

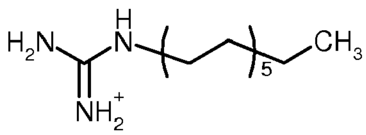

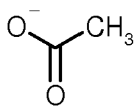

(13-2) Guazatine (bekannt aus GB 11 14 155)

(13-3) Iminoctadine triacetate (bekannt aus EP-A 0 155 509) der Formel

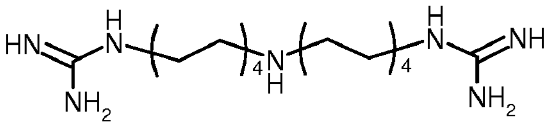

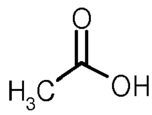

(13-4) Iminoctadine tris(albesilate)

Gruppe (14): Imidazole ausgewählt aus

(14-1) Cyazofamid (bekannt aus EP-A 0 298 196) der Formel

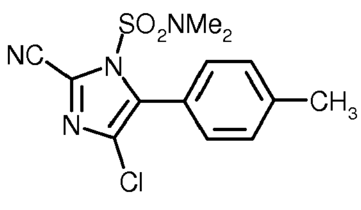

(14-2) Prochloraz (bekannt aus DE-A 24 29 523) der Formel

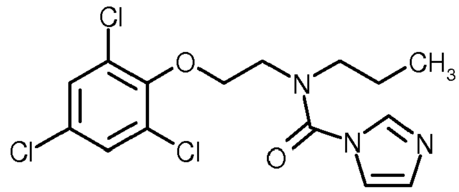

(14-3) Triazoxide (bekannt aus DE-A 28 02 488) der Formel

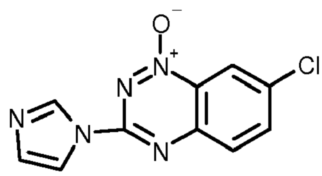

(14-4) Pefurazoate (bekannt aus EP-A 0 248 086) der Formel

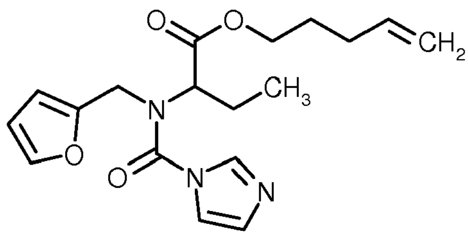

Gruppe (15): Morpholine ausgewählt aus

(15-1) Aldimorph (bekannt aus DD 140 041) der Formel

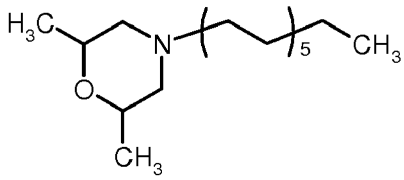

(15-2) Tridemorph (bekannt aus GB 988 630) der Formel

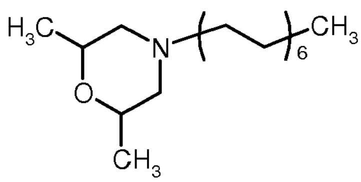

(15-3) Dodemorph (bekannt aus DE-A 25 432 79) der Formel

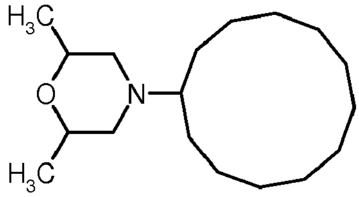

(15-4) Fenpropimorph (bekannt aus DE-A 26 56 747) der Formel

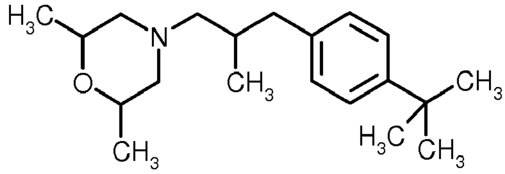

(15-5) Dimethomorph (bekannt aus EP-A 0 219 756) der Formel

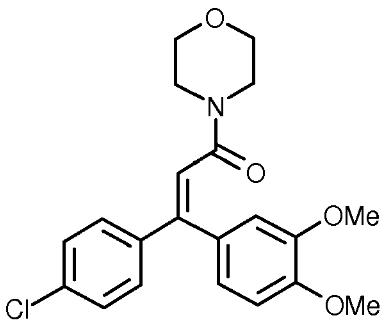

(15-6) Flumorph (bekannt aus EP-A 0 086 438) der Formel

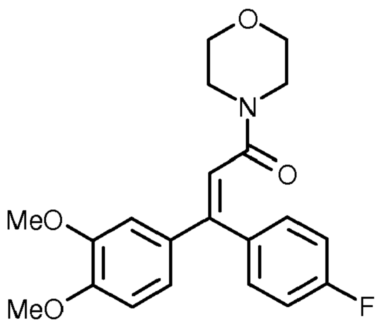

Gruppe (16): Pyrrole ausgewählt aus

(16-1) Fenpiclonil (bekannt aus EP-A 0 236 272) der Formel

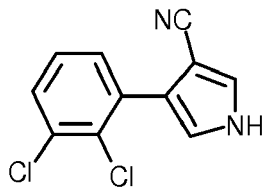

(16-2) Fludioxonil (bekannt aus EP-A 0 206 999) der Formel

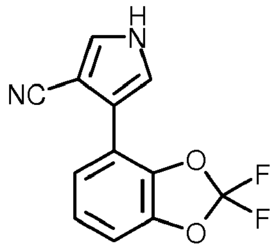

(16-3) Pyrrolnitrine (bekannt aus JP-A 65-25876) der Formel

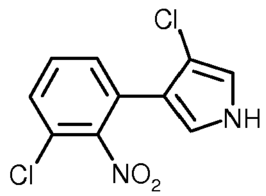

Gruppe (17): Phosphonate ausgewählt aus

(17-1) Fosetyl-Al (bekannt aus DE-A 24 56 627) der Formel

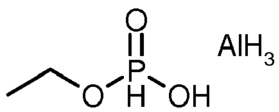

(17-2) Phosphonic acid (bekannte Chemikalie) der Formel

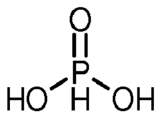

Gruppe (18): Phenylethanamide (bekannt aus WO 96/23793, E- oder Z-Isomer, bevorzugt E-Isomer) ausgewählt aus

(18-1) 2-(2,3-Dihydro-1H-inden-5-yl)-N-[2-(3,4-dimethoxyphenyl)ethyl]-2-(methoxyimino)acetamid der Formel

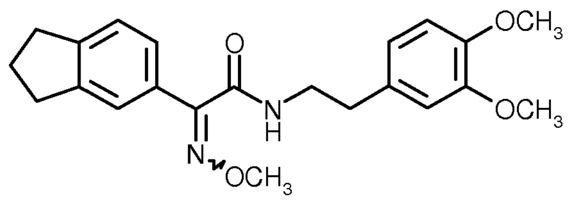

(18-2) N-[2-(3,4-Dimethoxyphenyl)ethyl]-2-(methoxyimino)-2-(5,6,7,8-tetrahydronaphthalen-2-yl)acetamid der Formel

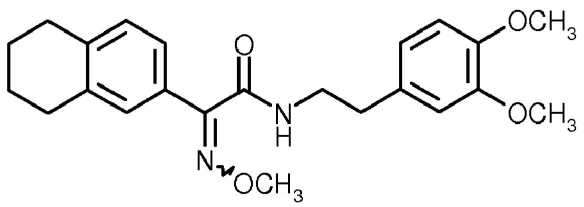

(18-3) 2-(4-Chlorphenyl)-N-[2-(3,4-dimethoxyphenyl)ethyl]-2-(methoxyimino)acetamid der Formel

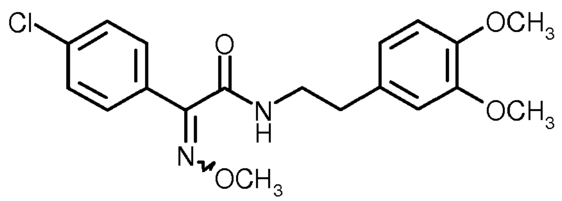

(18-4) 2-(4-Bromphenyl)-N-[2-(3,4-dimethoxyphenyl)ethyl]-2-(methoxyimino)acetamid der Formel

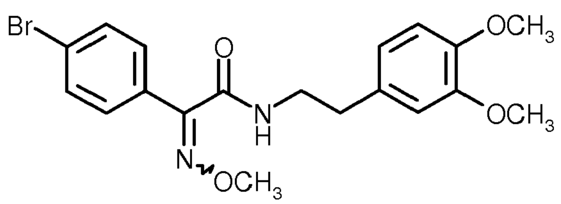

(18-5) 2-(4-Methylphenyl)-N-[2-(3,4-dimethoxyphenyl)ethyl]-2-(methoxyimino)acetamid der Formel

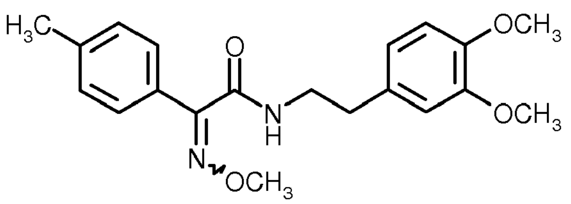

(18-6) 2-(4-Ethylphenyl)-N-[2-(3,4-dimethoxyphenyl)ethyl]-2-(methoxyimino)acetamid der Formel

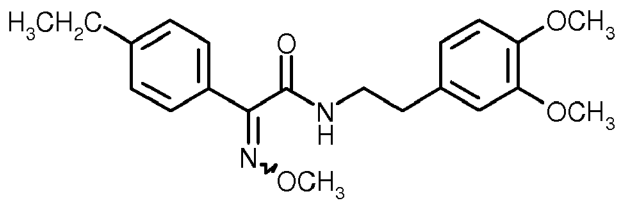

Gruppe (19): Fungizide ausgewählt aus

(19-1) Acibenzolar-S-methyl (bekannt aus EP-A 0 313 512) der Formel

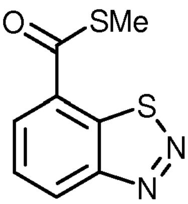

(19-2) Chlorothalonil (bekannt aus US 3,290,353) der Formel

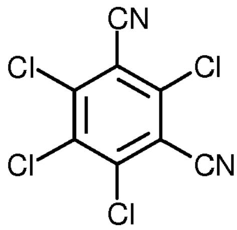

(19-3) Cymoxanil (bekannt aus DE-A 23 12 956) der Formel

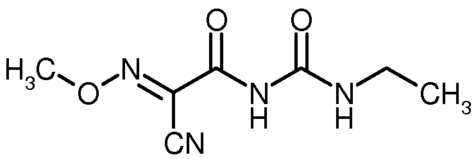

(19-4) Edifenphos (bekannt aus DE-A 14 93 736) der Formel

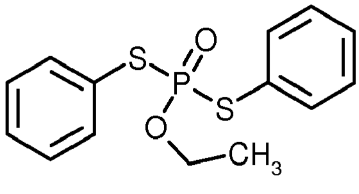

(19-5) Famoxadone (bekannt aus EP-A 0 393 911) der Formel

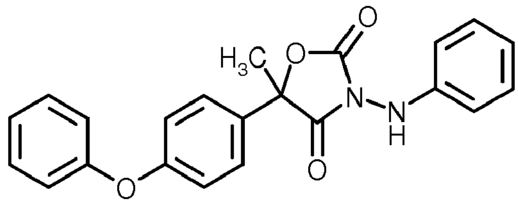

(19-6) Fluazinam (bekannt aus EP-A 0 031 257) der Formel

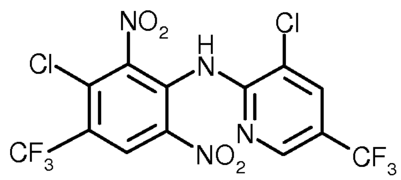

(19-7) Kupferoxychlorid

(19-9) Oxadixyl (bekannt aus DE-A 30 30 026) der Formel

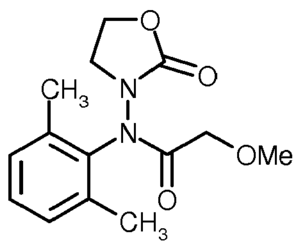

(19-10) Spiroxamine (bekannt aus DE-A 37 35 555) der Formel

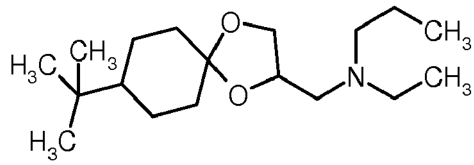

(19-11) Dithianon (bekannt aus JP-A 44-29464) der Formel

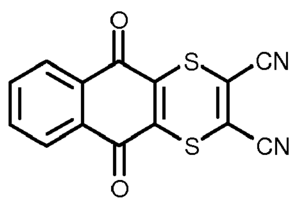

(19-12) Metrafenone (bekannt aus EP-A 0 897 904) der Formel

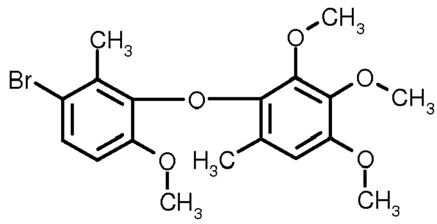

(19-13) Fenamidone (bekannt aus EP-A 0 629 616) der Formel

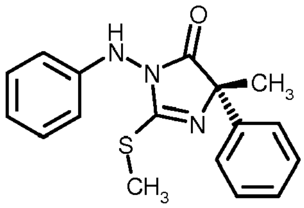

(19-14) 2,3-Dibutyl-6-chlor-thieno[2,3-d]pyrimidin-4(3H)on (bekannt aus WO 99/14202) der Formel

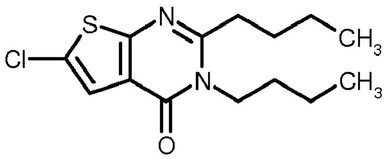

(19-15) Probenazole (bekannt aus US 3,629,428) der Formel

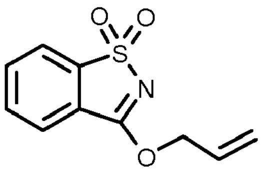

(19-16) Isoprothiolane (bekannt aus US 3,856,814) der Formel

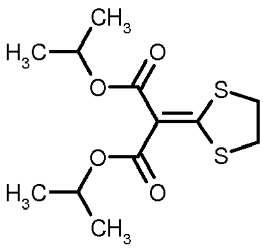

(19-17) Kasugamycin (bekannt aus GB 1 094 567) der Formel

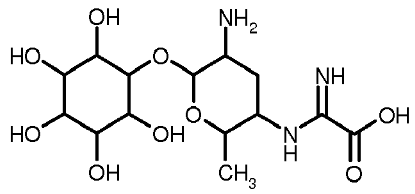

(19-18) Phthalide (bekannt aus JP-A 57-55844) der Formel

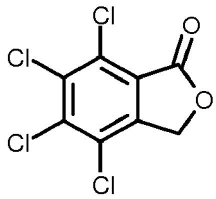

(19-19) Ferimzone (bekannt aus EP-A 0 019 450) der Formel

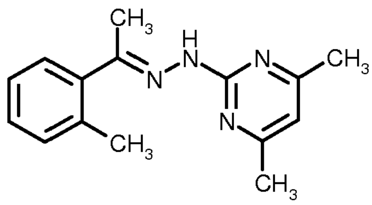

(19-20) Tricyclazole (bekannt aus DE-A 22 50 077) der Formel

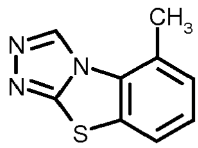

(19-21) N-({4-[(Cyclopropylamino)carbonyl]phenyl}sulfonyl)-2-methoxybenzamid der Formel

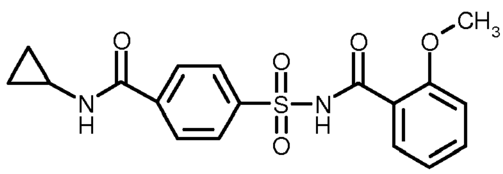

(19-22) 2-(4-Chlorphenyl)-N-{2-[3-methoxy-4-(prop-2-in-1-yloxy)phenyl]ethyl}-2-(prop-2-in-1-yloxy)acetamid (bekannt aus WO 01/87822) der Formel

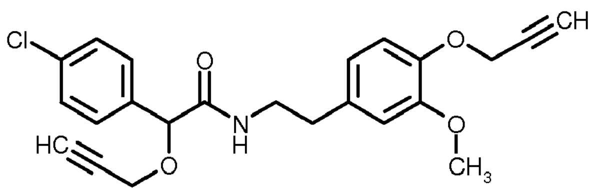

(19-23) Proquinazid (bekannt aus WO 09426722) der Formel

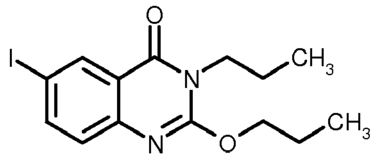

(19-24) Quinoxyfen (bekannt aus EP-A 0 326 330) der Formel

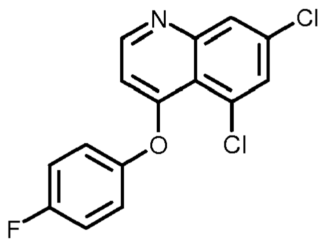

(19-25) Cyflufenamid (bekannt aus WO 96/19442) der Formel

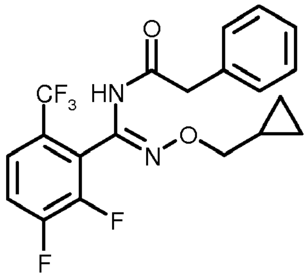

(19-26) Pyribencarb (bekannt aus WO 01/10825) der Formel

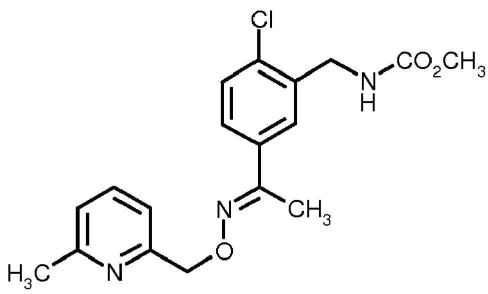

(19-27) 3-[5-(4-Chlorphenyl)-2,3-dimethyl-3-isoxazolidinyl]-pyridin (bekannt aus EP-A 1 035 122) der Formel

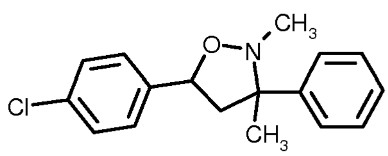

Gruppe (20): (Thio)Harnstoff-Derivate ausgewählt aus

(20-1) Pencycuron (bekannt aus DE-A 27 32 257) der Formel

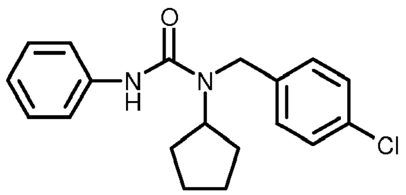

(20-2) Thiophanate-methyl (bekannt aus DE-A 18 06 123) der Formel

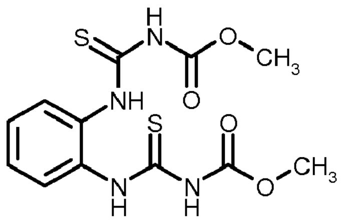

(20-3) Thiophanate-ethyl (bekannt aus DE-A 18 06 123) der Formel

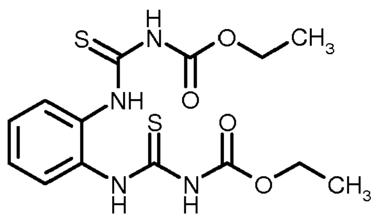

Gruppe (21): Amide ausgewählt aus

(21-1) Fenoxanil (bekannt aus EP-A 0 262 393) der Formel

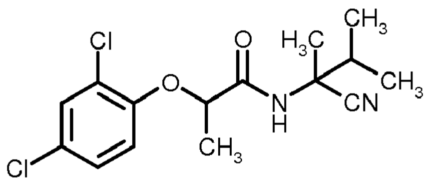

(21-2) Diclocymet (bekannt aus JP-A 7-206608) der Formel

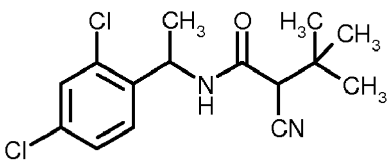

Gruppe (22): Triazolopyrimidine ausgewählt aus

(22-1) 5-Chlor-*N*-[*(1S)*-2,2,2-trifluor-1-methylethyl]-6-(2,4,6-trifluorphenyl)[1,2,4]triazolo[1,5-a]pyrimidin-7-amin (bekannt aus US 5,986,135) der Formel

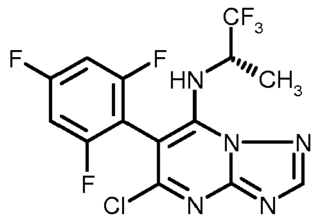

(22-2) 5-Chlor-*N*-[*(1R)*-1,2-dimethylpropyl]-6-(2,4,6-trifluorphenyl)[1,2,4]triazolo[1,5-a]pyrimidin-7-amin (bekannt aus WO 02/38565) der Formel

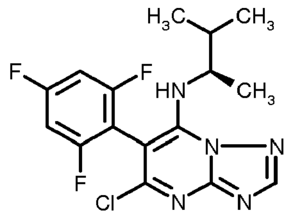

(22-3) 5-Chlor-6-(2-chlor-6-fluorphenyl)-7-(4-methylpiperidin-1-yl)[1,2,4]triazolo[1,5-a]pyrimidin (bekannt aus US 5,593,996) der Formel

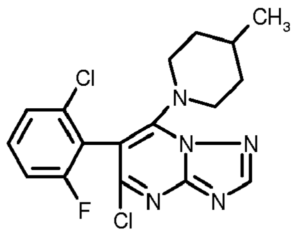

(22-4) 5-Chlor-6-(2,4,6-trifluorphenyl)-7-(4-methylpiperidin-1-yl)[1,2,4]triazolo[1,5-a]pyrimidin (bekannt aus DE-A 101 24 208) der Formel

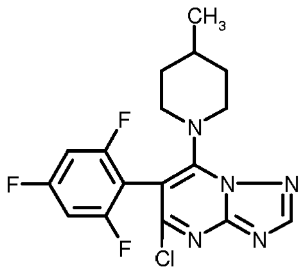

<u>Gruppe (23): Iodochromone ausgewählt aus</u>

(23-1) 2-Butoxy-6-iod-3-propyl-benzopyran-4-on (bekannt aus WO 03/014103) der Formel

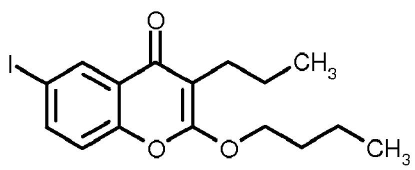

(23-2) 2-Ethoxy-6-iod-3-propyl-benzopyran-4-on (bekannt aus WO 03/014103) der Formel

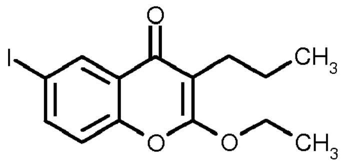

(23-3) 6-Iod-2-propoxy-3-propyl-benzopyran-4-on (bekannt aus WO 03/014103) der Formel

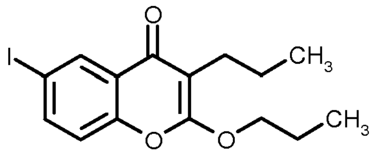

(23-4) 2-But-2-inyloxy-6-iod-3-propyl-benzopyran-4-on (bekannt aus WO 03/014103) der Formel

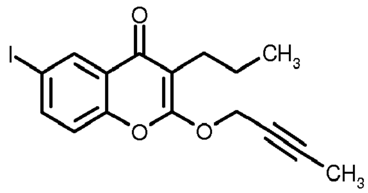

(23-5) 6-Iod-2-(1-methyl-butoxy)-3-propyl-benzopyran-4-on (bekannt aus WO 03/014103) der Formel

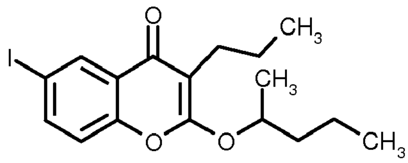

(23-6) 2-But-3-enyloxy-6-iod-benzopyran-4-on (bekannt aus WO 03/014103) der Formel

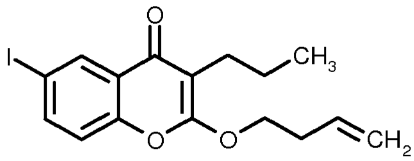

(23-7) 3-Butyl-6-iod-2-isopropoxy-benzopyran-4-on (bekannt aus WO 03/014103) der Formel

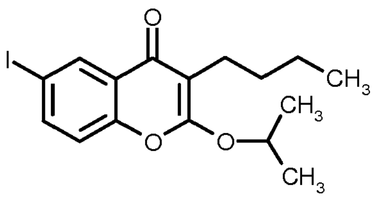

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer, echter synergistischer Effekt vor und nicht nur eine Wirkungsergänzung.

Die Verbindung (6-35) Carpropamid besitzt drei asymmetrische substituierte Kohlenstoffatome. Die Verbindung (6-35) kann daher als Gemisch von verschiedenen Isomeren oder auch in Form einer einzigen Komponente vorliegen. Besonders bevorzugt sind die Verbindungen

(1*S*,3*R*)-2,2-Dichlor-*N*-[(1*R*)-1-(4-chlorphenyl)ethyl]-1-ethyl-3-methylcyclopropancarboxamid der Formel

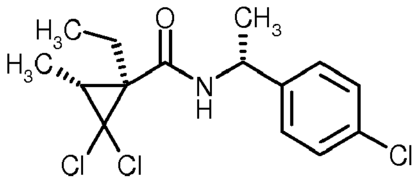

und

(1*R*,3*S*)-2,2-Dichlor-*N*-[(1*R*)-1-(4-chlorphenyl)ethyl]-1-ethyl-3-methylcyclopropancarboxamid der Formel

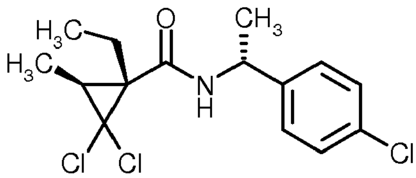

Hervorgehoben sind erfindungsgemäße Wirkstoffkombinationen, die neben (1-1) Glyphosate einen oder mehrere, bevorzugt einen, Mischungspartner der Gruppen (2) bis (23) enthalten.

Hervorgehoben sind erfindungsgemäße Wirkstoffkombinationen, die neben (1-2) Glufosinate einen oder mehrere, bevorzugt einen, Mischungspartner der Gruppen (2) bis (23) enthalten.

Hervorgehoben sind erfindungsgemäße Wirkstoffkombinationen, die neben (1-3) Glufosinate-ammonium einen oder mehrere, bevorzugt einen, Mischungspartner der Gruppen (2) bis (23) enthalten.

Als Mischungspartner der Gruppen (2) bis (23) sind die folgenden Wirkstoffe bevorzugt:

(2-1) Azoxystrobin, (2-2) Fluoxastrobin, (2-3) (2*E*)-2-(2-{[6-(3-Chlor-2-methylphenoxy)-5-fluor-4-pyrimidinyl]oxy}phenyl)-2-(methoxyimino)-*N*-methylethanamid, (2-4) Trifloxystrobin, (2-5) (2*E*)-2-(Methoxyimino)-*N*-methyl-2-(2-{[({(1*E*)-1-[3-(trifluormethyl)phenyl]ethyliden}amino)oxy]methyl}phenyl)ethanamid, (2-6) (2*E*)-2-(Methoxyimino)-*N*-methyl-2-{2-[(*E*)-(1-[3-(trifluormethyl)phenyl]ethoxy}imino)methyl]phenyl}-ethanamid, (2-8) 5-Methoxy-2-methyl-4-(2-{[({(1*E*)-1-[3-(trifluormethyl)phenyl]ethyliden}amino)oxy]methyl}phenyl)-2,4-dihydro-3*H*-1,2,4-triazol-3-on, (2-11) Picoxystrobin, (2-9) Kresoxim-methyl, (2-10) Dimoxystrobin, (2-12) Pyraclostrobin, (2-13) Metominostrobin, (3-3) Propiconazole, (3-4) Difenoconazole, (3-6) Cyproconazole, (3-7) Hexaconazole, (3-8) Penconazole, (3-9) Myclobutanil, (3-10) Tetraconazole, (3-13) Flusilazole, (3-15) Prothioconazole, (3-16) Fenbuconazole, (3-17) Tebuconazole, (3-21) Bitertanol, (3-22) Triadimenol, (3-23) Triadimefon, (3-12) Epoxiconazole, (3-19) Metconazole, (3-24) Fluquinconazole, (4-1) Dichlofluanid, (4-2) Tolylfluanid, (5-1) Iprovalicarb, (5-3) Benthiavalicarb, (6-2) *N*-[2-(1,3-Dimethylbutyl)phenyl]-5-fluor-1,3-dimethyl-1*H*-pyrazol-4-carboxamid, (6-5) 3-(Trifluormethyl)-*N*-[2-(1,3-dimethylbutyl)phenyl]-5-fluor-1-methyl-1*H*-pyrazo1-4-carboxanüd, (6-8) 5-Fluor-1,3-dimethyl-*N*-[2-(1,3,3-trimethylbutyl)phenyl]-1*H*-pyrazol-4-carboxamid, (6-13) *N*-[2-(1,3-Dimethylbutyl)phenyl]-2-iodbenzamid, (6-15) *N*-[2-(1,3-Dimethylbutyl)phenyl]-2-(trifluormethyl)benzamid, (6-18) Boscalid, (6-19) Furametpyr, (6-21) Penthiopyrad, (6-22) *N*-[2-(1,3-Dimethylbutyl)phenyl]-1-methyl-4-(trifluormethyl)-1*H*-pyrrol-3-carboxamid, (6-23) *N*-(3',4'-Dichlor-5-fluor-1,1'-biphenyl-2-yl)-3-(difluormethyl)-1-methyl-1*H*-pyrazol-4-carboxamid, (6-24) 3-(Difluormethyl)-*N*-{3'-fluor-4'-[(*E*)-(methoxyimino)methyl]-1,1'-biphenyl-2-yl}-1-methyl-1*H*-pyrazol-4-carboxamid, (6-25) 3-(Trifluormethyl)-*N*-{3'-fluor-4'-[(*E*)-(methoxyimino)methyl]-1,1'-biphenyl-2-yl}-1-methyl-1*H*-pyrazol-4-carboxamid, (6-26) *N*-(3',4'-Dichlor-1,1'-biphenyl-2-yl)-5-fluor-1,3-dimethyl-1*H*-pyrazol-4-carboxamid, (6-29) *N*-(4'-Brom-1,1'-biphenyl-2-yl)-4-(difluormethyl)-2-methyl-1,3-thiazol-5-carboxamid, (6-31) *N*-(4'-Iod-1,1'-biphenyl-2-yl)-4-(difluormethyl)-2-methyl-1,3-thiazol-5-carboxamid, (6-32) N-(4'-Chlor-3'-fluor-1,1'-biphenyl-2-yl)-2-methyl-4-(difluormethyl)-1,3-thiazol-5-carboxamid, (6-33) Ethaboxam, (6-34) Fenhexamid, (6-35) Carpropamid, (6-36) 2-Chlor-4-[(2-fluor-2-methylpropanoyl)amino]-*N*,*N*-dimethylbenzamid, (6-37) Fluopicolide, (6-38) Zoxamide, (6-39) 3,4-Dichlor-N-(2-cyanophenyl)isothiazol-5-carboxamid, (6-43) *N*-[2-(1,3-Dimethylbutyl)phenyl]-1-methyl-4-(trifluormethyl)-1*H*-pyrrol-3-carboxamid, (6-44) *N*-{2-[3-Chlor-5-(trifluormethyl)pyridin-2-yl]ethyl}-2-(trifluormethyl)benzamid, (6-45) 1-Methyl-3-trifluormethyl-1H-pyrazol-4-carbonsäure-(2-bicyclopropyl-2-yl-phenyl)-amid, (6-46) 1-Methyl-3-difluormethyl-1H-pyrazol-4-carbonsäure-(2-bicyclopropyl-2-yl-phenyl)-amid, (6-47) 1-Methyl-3-trifluormethyl-1H-pyrazol-4-carbonsäure-[2-(1'-methyl-bicyclopropyl-2-yl)-phenyl]-amid, (6-48) 1-Methyl-3-difluormethyl-1H-pyrazol-4-carbonsäure-[2-(1'-methyl-bicyclopropyl-2-yl)-phenyl]-amid, (6-49) N-[1-(5-Brom-3-chlorpyridin-2-yl)ethyl]-2,4-dichlornicotinamid, (6-50) N-(5-Brom-3-chlorpyridin-2-yl)methyl-2,4-dichlomicotinamid, (6-51) N-(3',4'-Dichlor-5-fluor-1,1'-biphenyl-2-yl)-3-(difluormethyl)-1-methyl-1H-pyrazol-4-carboxamid, (6-52) N-(3',4'-Dichlor-5-fluor-1,1'-biphenyl-2-yl)-3-(difluormethyl)-1-methyl-1H-pyrazol-4-carboxamid, (6-53) 3-Difluormethyl-1-methyl-1H-pyrazol-4-carbonsäure[2-(3,3-dimethyl-butyl)-phenyl]-amid, (7-1) Mancozeb, (7-2) Maneb, (7-4) Propineb, (7-5) Thiram, (7-6) Zineb, (8-1) Benalaxyl, (8-2) Furalaxyl, (8-3) Metalaxyl, (8-4) Metalaxyl-M, (8-5) Benalaxyl-M, (9-1) Cyprodinil, (9-2) Mepanipyrim, (9-3) Pyrimethanil, (10-1) 6-Chlor-5-[(3,5-dimethylisoxazol-4-yl)sulfonyl]-2,2-difluor-5H-[1,3]dioxolo[4,5-f]benzimidazol, (10-3) Carbendazim, (11-1) Diethofencarb, (11-2) Propamocarb, (11-3) Propamocarb-hydrochloride, (11-4) Propamocarb-Fosetyl, (12-2) Captan, (12-3) Folpet, (12-4) Iprodione, (12-5) Procymidone, (13-1) Dodine, (13-2) Guazatine, (13-3) Iminoctadine triacetate, (14-1) Cyazofamid, (14-2) Prochloraz, (14-3) Triazoxide, (15-5) Dimethomorph, (15-4) Fenpropimorph, (16-2) Fludioxonil, (17-1) Fosetyl-Al, (17-2) Phosphonic acid, (19-1) Acibenzolar-S-methyl, (19-2) Chlorothalonil, (19-3) Cymoxanil, (19-5) Famoxadone, (19-6) Fluazinam, (19-9) Oxadixyl, (19-10) Spiroxamine, (19-7) Kupferoxychlorid, (19-13) Fenamidone, (19-22) 2-(4-Chlorphenyl)-N-{2-[3-methoxy-4-(prop-2-in-1-yloxy)phenyl]-ethyl}-2-(prop-2-in-1-yloxy)acetamid, (20-1) Pencycuron, (20-2) Thiophanate-methyl, (22-1) 5-Chlor-*N*-[*(1S)*-2,2,2-trifluor-1-methylethyl]-6-(2,4,6-trifluorphenyl)[1,2,4]triazolo[1,5-a]pyrimidin-7-amin, (22-2) 5-Chlor-*N*-[*(1R)*-1,2-dimethylpropyl]-6-(2,4,6-trifluorphenyl)[1,2,4]triazolo[1,5-a]pyrimidin-7-amin, (22-4) 5-Chlor-6-(2,4,6-trifluorphenyl)-7-(4-methylpiperidin-1-yl)[1,2,4]triazolo[1,5-a]pyrimidin, (23-1) 2-Butoxy-6-iod-3-propyl-benzopyran-4-on, (23-2) 2-Ethoxy-6-iod-3-propyl-benzopyran-4-on, (23-3) 6-Iod-2-propoxy-3-propyl-benzopyran-4-on.

Zur Bekämpfung von Rost-Krankheiten an Soja-Pflanzen sind davon insbesondere bevorzugt:
(2-1) Azoxystrobin, (2-2) Fluoxastrobin, (2-4) Trifloxystrobin, (2-6) (2*E*)-2-(Methoxyimino)-*N*-methyl-2-{2-[(*E*)-({1-[3-(trifluormethyl)phenyl]ethoxy}imino)methyl]phenyl}ethanamid, (2-8) 5-Methoxy-2-methyl-4-(2-{[({(1*E*)-1-[3-(trifluormethyl)phenyl]ethyliden}amino)oxy]methyl}phenyl)-2,4-dihydro-3*H*-1,2,4-triazol-3-on, (2-11) Picoxystrobin, (2-9) Kresoxim-methyl, (2-10) Dimoxystrobin, (2-12) Pyraclostrobin, (2-13) Metominostrobin, (3-3) Propiconazole, (3-4) Difenoconazole, (3-6) Cyproconazole, (3-7) Hexaconazole, (3-8) Penconazole, (3-9) Myclobutanil, (3-10) Tetraconazole, (3-13) Flusilazole, (3-15) Prothioconazole, (3-16) Fenbuconazole, (3-17) Tebuconazole, (3-21) Bitertanol, (3-22) Triadimenol, (3-23) Triadimefon, (3-12) Epoxiconazole, (3-19) Metconazole, (3-24) Fluquinconazole, (4-1) Dichlofluanid, (4-2) Tolylfluanid, (6-2) *N*-[2-(1,3-Dimethylbutyl)phenyl]-5-fluor-1,3-dimethyl-1*H*-pyrazol-4-carboxamid, (6-8) 5-Fluor-1,3-dimethyl-*N*-[2-(1,3,3-trimethylbutyl)phenyl]-1*H*-pyrazol-4-carboxamid, (6-13) *N*-[2-(1,3-Dimethylbutyl)phenyl]-2-iod-benzamid, (6-15) *N*-[2-(1,3-Dimethylbutyl)phenyl]-2-(trifluormethyl)benzamid, (6-18) Boscalid, (6-19) Furametpyr, (6-21) Penthiopyrad, (6-22) *N*-[2-(1,3-Dimethylbutyl)phenyl]-1-methyl-4-(trifluormethyl)-1*H*-pyrrol-3-carboxamid, (6-23) *N*-(3',4'-Dichlor-5-fluor-1,1'-biphenyl-2-yl)-3-(difluormethyl)-1-methyl-1*H*-pyrazol-4-carboxamid, (6-26) *N*-(3',4'-Dichlor-1,1'-biphenyl-2-yl)-5-fluor-1,3-dimethyl-1*H*-pyrazol-4-carboxamid, (6-29) N-(4'-Brom-1,1'-biphenyl-2-yl)-4-(difluormethyl)-2-methyl-1,3-thiazol-5-carboxamid, (6-31) *N*-(4'-Iod-1,1'-biphenyl-2-yl)-4-(difluormethyl)-2-methyl-1,3-thiazol-5-carboxamid, (6-32) N-(4'-Chlor-3'-fluor-1,1'-biphenyl-2-yl)-2-methyl-4-(difluormethyl)-1,3-thiazol-5-carboxamid, (6-39) 3,4-Dichlor-N-(2-cyanophenyl)isothiazol-5-carboxamid, (6-43) *N*-[2-(1,3-Dimethylbutyl)phenyl]-1-methyl-4-(trifluormethyl)-1*H*-pyrrol-3-carboxamid, (6-45) 1-Methyl-3-trifluormethyl-1H-pyrazol-4-carbonsäure-(2-bicyclopropyl-2-yl-phenyl)-amid, (6-46) 1-Methyl-3-difluormethyl-1H-pyrazol-4-carbonsäure-(2-bicyclopropyl-2-yl-phenyl)-amid, (6-47) 1-Methyl-3-trifluormethyl-1H-pyrazol-4-carbonsäure-[2-(1'-methyl-bicyclopropyl-2-yl)-phenyl]-amid, (6-48) 1-Methyl-3-difluormethyl-1H-pyrazol-4-carbonsäure-[2-(1'-methyl-bicyclopropyl-2-yl)-phenyl]-amid, (6-49) N-[1-(5-Brom-3-chlorpyridin-2-yl)ethyl]-2,4-dichlomicotinamid, (6-50) N-(5-Brom-3-chlorpyridin-2-yl)methyl-2,4-dichlornicotinamid, (6-51) N-(3',4'-Dichlor-5-fluor-1,1'-biphenyl-2-yl)-3-(difluormethyl)-1-methyl-1H-pyrazol-4-carboxamid, (6-52) N-(3',4'-Dichlor-5-fluor-1,1'-biphenyl-2-yl)-3-(difluormethyl)-1-methyl-1H-pyrazol-4-carboxamid, (6-53) 3-Difluormethyl-1-methyl-1H-pyrazol-4-carbonsäure[2-(3,3-dimethyl-butyl)-phenyl]-amid, (7-1) Mancozeb, (7-2) Maneb, (7-4) Propineb, (7-5) Thiram, (7-6) Zineb, (9-1) Cyprodinil, (9-2) Mepanipyrim, (9-3) Pyrimethanil, (10-3) Carbendazim, (11-1) Diethofencarb, (12-2) Captan, (12-3) Folpet, (12-4) Iprodione, (12-5) Procymidone, (13-1) Dodine, (13-2) Guazatine, (13-3) Iminoctadine triacetate, (14-2) Prochloraz, (15-4) Fenpropimorph, (16-2) Fludioxonil, (19-1) Acibenzolar-S-methyl, (19-2) Chlorothalonil, (19-3) Cymoxanil, (19-6) Fluazinam, (19-10) Spiroxamine, (19-7) Kupferoxychlorid, (20-2) Thiophanate-methyl, (22-1) 5-Chlor-*N*-[*(1S)*-2,2,2-thfluor-1-methylethyl]-6-(2,4,6-trifluorphenyl)[1,2,4]triazolo[1,5-a]pyrimidin-7-amin, (22-2) 5-Chlor-*N*-[*(1R)*-1,2-dimethylpropyl]-6-(2,4,6-trifluorphenyl)[1,2,4]triazolo[1,5-a]pyrimidin-7-amin, (22-4) 5-Chlor-6-(2,4,6-trifluorphenyl)-7-(4-methylpiperidin-1-yl)[1,2,4]triazolo[1,5-a]pyrimidin.

Als Mischungspartner der Gruppen (2) bis (23) sind die folgenden Wirkstoffe besonders bevorzugt:
(2-2) Fluoxastrobin, (2-4) Trifloxystrobin, (2-3) (2*E*)-2-(2-{[6-(3-Chlor-2-methylphenoxy)-5-fluor-4-pyrimidinyl]oxy}phenyl)-2-(methoxyimino)-*N*-methylethanamid, (3-15) Prothioconazole, (3-17) Tebuconazole, (3-21) Bitertanol, (3-22) Triadimenol, (3-24) Fluquinconazole, (4-1) Dichlofluanid, (4-2) Tolylfluanid, (5-1) Iprovalicarb, (6-2) *N*-[2-(1,3-Dimethylbutyl)phenyl]-5-fluor-1,3-dimethyl-1*H*-pyrazol-4-carboxamid, (6-8) 5-Fluor-1,3-dimethyl-*N*-[2-(1,3,3-trimethylbutyl)phenyl]-1*H*-pyrazol-4-carboxamid, (6-13) *N*-[2-(1,3-Dimethylbutyl)phenyl]-2-iodbenzamid, (6-15) *N*-[2-(1,3-Dimethylbutyl)phenyl]-2-(trifluormethyl)benzamid, (6-18) Boscalid, (6-21) Penthiopyrad, (6-22) *N*-[2-(1,3-Dimethylbutyl)phenyl]-1-methyl-4-(trifluormethyl)-1*H*-pyrrol-3-carboxamid, (6-23) *N*-(3',4'-Dichlor-5-fluor-1,1'-biphenyl-2-yl)-3-(difluormethyl)-1-methyl-1*H*-pyrazol-4-carboxamid, (6-29) *N*-(4'-Brom-1,1'-biphenyl-2-yl)-4-(difluormethyl)-2-methyl-1,3-thiazol-5-carboxamid, (6-31) *N*-(4'-Iod-1,1'-biphenyl-2-yl)-4-(difluormethyl)-2-methyl-1,3-thiazol-5-carboxamid, (6-32) *N*-(4'-Chlor-3'-fluor-1,1'-biphenyl-2-yl)-2-methyl-4-(difluormethyl)-1,3-thiazol-5-carboxamid, (6-34) Fenhexamid, (6-35) Carpropamid, (6-37) Fluopicolide, (6-44) *N*-{2-[3-Chlor-5-(trifluormethyl)pyridin-2-yl]ethyl}-2-(trifluormethyl)benzamid, (6-53) 3-Difluormethyl-1-methyl-1H-pyrazol-4-carbonsäure[2-(3,3-dimethyl-butyl)-phenyl]-amid, (7-4) Propineb, (8-4) Metalaxyl-M, (8-5) Benalaxyl-M, (9-3) Pyrimethanil, (10-3) Carbendazim, (11-4) Propamocarb-Fosetyl, (12-4) Iprodione, (14-2) Prochloraz, (14-3) Triazoxide, (16-2) Fludioxonil, (19-10) Spiroxamine, (19-22) 2-(4-Chlorphenyl)-N-{2-[3-methoxy-4-(prop-2-in-1-yloxy)phenyl]ethyl}-2-(prop-2-in-1-yloxy)acetamid, (22-4) 5-Chlor-6-(2,4,6-trifluorphenyl)-7-(4-methylpiperidin-1-yl) [1,2,4]triazolo[1,5-a]pyrimidin.

Zur Bekämpfung von Rost-Krankheiten an Soja-Pflanzen sind davon insbesondere bevorzugt:
(2-2) Fluoxastrobin, (2-4) Trifloxystrobin, (3-15) Prothioconazole, (3-17) Tebuconazole, (3-21) Bitertanol, (3-22) Triadimenol, (3-24) Fluquinconazole, (4-1) Dichlofluanid, (4-2) Tolylfluanid, (6-2) *N*-[2-(1,3-Dimethylbutyl)phenyl]-5-fluor-1,3-dimethyl-1*H*-pyrazol-4-carboxamid, (6-8) 5-Fluor-1,3-dimethyl-*N*-[2-(1,3,3-trimethylbutyl)phenyl]-1*H*-pyrazol-4-carboxamid, (6-13) *N*-[2-(1,3-Dimethylbutyl)phenyl]-2-iod-benzamid, (6-15) *N*-[2-(1,3-Dimethylbutyl)phenyl]-2-(trifluormethyl)benzamid, (6-18) Boscalid, (6-21) Penthiopyrad, (6-22) *N*-[2-(1,3-Dimethylbutyl)phenyl]-1-methyl-4-(trifluormethyl)-1*H*-pyrrol-3-carboxamid, (6-23) *N*-(3',4'-Dichlor-5-fluor-1,1'-biphenyl-2-yl)-3-(difluormethyl)-1-methyl-1*H*-pyrazol-4-carboxamid, (6-29) *N*-(4'-Brom-1,1'-biphenyl-2-yl)-4-(difluormethyl)-2-methyl-1,3-thiazol-5-carboxamid, (6-31) *N*-(4'-Iod-1,1'-biphenyl-2-yl)-4-(difluormethyl)-2-methyl-1,3-thiazol-5-carboxamid, (6-32) *N*-(4'-Chlor-3'-fluor-1,1'-biphenyl-2-yl)-2-methyl-4-(difluormethyl)-1,3-thiazol-5-carboxamid, (6-53) 3-Difluormethyl-1-methyl-1H-pyrazol-4-carbonsäure [2-(3,3-dimethyl-butyl)-phenyl]-amid, (7-4) Propineb, (9-3) Pyrimethanil, (10-3) Carbendazim, (12-4) Iprodione, (14-2) Prochloraz, (16-2) Fludioxonil, (19-10) Spiroxamine, (22-4) 5-Chlor-6-(2,4,6-trifluorphenyl)-7-(4-methylpiperidin-1-yl) [1,2,4]triazolo[1,5-a]pyrimidin.

Im Folgenden werden bevorzugte Wirkstoffkombinationen beschrieben, die aus zwei Gruppen von Wirkstoffen bestehen und jeweils wenigstens ein Herbizid der Gruppe (1) und wenigstens einen Wirkstoff der angegebenen Gruppe (2) bis (23) enthalten.

Hervorgehoben sind die in der folgenden Tabelle 1 angeführten Wirkstoffkombinationen:

**Tabelle 1:**

| Nr. | Herbizid | Wirkstoff der Gruppe (2) bis (23) |
|---|---|---|
| 1 | (1-1) Glyphosate | (2-2) Fluoxastrobin |
| 2 | (1-1) Glyphosate | (2-4) Trifloxystrobin |
| 3 | (1-1) Glyphosate | (2-3) (2E)-2-(2-{[6-(3-Chlor-2-methylphenoxy)-5-fluor-4-pyrimidinyl]oxy} phenyl)-2-(methoxyimino)-N-methylethanamid |
| 4 | (1-1) Glyphosate | (3-15) Prothioconazole |
| 5 | (1-1) Glyphosate | (3-17) Tebuconazole |
| 6 | (1-1) Glyphosate | (3-21) Bitertanol |
| 7 | (1-1) Glyphosate | (3-22) Triadimenol |
| 8 | (1-1) Glyphosate | (3-24) Fluquinconazole |
| 9 | (1-1) Glyphosate | (4-1) Dichlofluanid |
| 10 | (1-1) Glyphosate | (4-2) Tolylfluanid |
| 11 | (1-1) Glyphosate | (5-1) Iprovalicarb |
| 12 | (1-1) Glyphosate | (6-2) N-[2-(1,3-Dimethylbutyl)phenyl]-5-fluor-1,3-dimethyl-1H-pyrazol-4-carboxamid |
| 13 | (1-1) Glyphosate | (6-8) 5-Fluor-1,3-dimethyl-N-[2-(1,3,3-trimethylbutyl)phenyl]-1H-pyrazol-4-carboxamid |
| 14 | (1-1) Glyphosate | (6-13) N-[2-(1,3-Dimethylbutyl)phenyl]-2-iodbenzami |
| 15 | (1-1) Glyphosate | (6-15) N-[2-(1,3-Dimethylbutyl)phenyl]-2-(trifluormethyl)benzamid |

(fortgesetzt)

| Nr. | Herbizid | Wirkstoff der Gruppe (2) bis (23) |
|---|---|---|
| 16 | (1-1) Glyphosate | (6-18) Boscalid |
| 17 | (1-1) Glyphosate | (6-21) Penthiopyrad |
| 18 | (1-1) Glyphosate | (6-22) N-[2-(1,3-Dimethylbutyl)phenyl]-1-methyl-4-(trifluormethyl)-1H-pyrrol-3-carboxamid |
| 19 | (1-1) Glyphosate | (6-23) N-(3',4'-Dichlor-5-fluor-1,1'-biphenyl-2-yl)-3-(difluormethyl)-1-methyl-1H-pyrazol-4-carboxamid |
| 20 | (1-1) Glyphosate | (6-29) N-(4'-Brom-1,1'-biphenyl-2-yl)-4-(difluormethyl)-2-methyl-1,3-thiazol-5-carboxamid |
| 21 | (1-1) Glyphosate | (6-31) N-(4'-Iod-1,1'-biphenyl-2-yl)-4-(difluormethyl)-2-methyl-1,3-thiazol-5-carboxamid |
| 22 | (1-1) Glyphosate | (6-32) N-(4'-Chlor-3'-fluor-1,1'-biphenyl-2-yl)-2-methyl-4-(difluormethyl)-1,3-thiazol-5-carboxamid |
| 23 | (1-1) Glyphosate | (6-34) Fenhexamid |
| 24 | (1-1) Glyphosate | (6-35) Carpropamid |
| 25 | (1-1) Glyphosate | (6-37) Fluopicolide |
| 26 | (1-1) Glyphosate | (6-44) N-{2-[3-Chlor-5-(trifluormethyl)pyridin-2-yl]ethyl}-2-(trifluormethyl) benzamid |
| 27 | (1-1) Glyphosate | (6-53) 3-Difluormethyl-1-methyl-1H-pyrazol-4-carbonsäure[2-(3,3-dimethyl-butyl)-phenyl]-amid |
| 28 | (1-1) Glyphosate | (7-4) Propineb |
| 29 | (1-1) Glyphosate | (8-4) Metalaxyl-M |
| 30 | (1-1) Glyphosate | (8-5) Benalaxyl-M |
| 31 | (1-1) Glyphosate | (9-3) Pyrimethanil |
| 32 | (1-1) Glyphosate | (10-3) Carbendazim |
| 33 | (1-1) Glyphosate | (11-4) Propamocarb-Fosetyl |
| 34 | (1-1) Glyphosate | (12-4) Iprodione |
| 35 | (1-1) Glyphosate | (14-2) Prochloraz |
| 36 | (1-1) Glyphosate | (14-3) Triazoxide |
| 37 | (1-1) Glyphosate | (16-2) Fludioxonil |
| 38 | (1-1) Glyphosate | (19-10) Spiroxamine |
| 39 | (1-1) Glyphosate | (19-22) 2-(4-Chlorphenyl)-N-{2-[3-methoxy-4-(prop-2-in-1-yloxy)phenyl] ethyl}-2-(prop-2-in-1-yloxy)acetamid |
| 40 | (1-1) Glyphosate | (22-4) 5-Chlor-6-(2,4,6-trifluorphenyl)-7-(4-methylpiperidin-1-yl)[1,2,4] triazolo[1,5-a]pyrimidin |
| 41 | (1-2) Glufosinate | (2-2) Fluoxastrobin |
| 42 | (1-2) Glufosinate | (2-4) Trifloxystrobin |
| 43 | (1-2) Glufosinate | (2-3) (2E)-2-(2-{[6-(3-Chlor-2-methylphenoxy)-5-fluor-4-pyrimidinyl]oxy} phenyl)-2-(methoxyimino)-N-methylethanamid |
| 44 | (1-2) Glufosinate | (3-15) Prothioconazole |
| 45 | (1-2) Glufosinate | (3-17) Tebuconazole |
| 46 | (1-2) Glufosinate | (3-21) Bitertanol |

(fortgesetzt)

| Nr. | Herbizid | Wirkstoff der Gruppe (2) bis (23) |
|---|---|---|
| 47 | (1-2) Glufosinate | (3-22) Triadimenol |
| 48 | (1-2) Glufosinate | (3-24) Fluquinconazole |
| 49 | (1-2) Glufosinate | (4-1) Dichlofluanid |
| 50 | (1-2) Glufosinate | (4-2) Tolylfluanid |
| 51 | (1-2) Glufosinate | (5-1) Iprovalicarb |
| 52 | (1-2) Glufosinate | (6-2) N-[2-(1,3-Dimethylbutyl)phenyl]-5-fluor-1,3-dimethyl-1H-pyrazol-4-carboxamid |
| 53 | (1-2) Glufosinate | (6-8) 5-Huor-1,3-dimethyl-N-[2-(1,3,3-trimethylbutyl)phenyl]-1H-pyrazol-4-carboxamid |
| 54 | (1-2) Glufosinate | (6-13) N-[2-(1,3-Dimethylbutyl)phenyl]-2-iodbenzamid |
| 55 | (1-2) Glufosinate | (6-15) N-[2-(1,3-Dimethylbutyl)phenyl]-2-(trifluormethyl)benzamid |
| 56 | (1-2) Glufosinate | (6-18) Boscalid |
| 57 | (1-2) Glufosinate | (6-21) Penthiopyrad |
| 58 | (1-2) Glufosinate | (6-22) N-[2-(1,3-Dimethylbutyl)phenyl]-1-methyl-4-(trifluormethyl) 1H-pyrrol-3-carboxamid |
| 59 | (1-2) Glufosinate | (6-23) N-(3',4'-Dichlor-5-fluor-1,1'-biphenyl-2-yl)-3-(difluormethyl)-1-methyl-1H-pyrazol-4-carboxamid |
| 60 | (1-2) Glufosinate | (6-29) N-(4'-Brom-1,1'-biphenyl-2-yl)-4-(difluormethyl)-2-methyl-1,3-thiazol-5-carboxamid |
| 61 | (1-2) Glufosinate | (6-31) N-(4'-Iod-1,1'-biphenyl-2-yl)-4-(difluormethyl)-2-methyl-1,3-thiazol-5-carboxamid |
| 62 | (1-2) Glufosinate | (6-32) N-(4'-Chlor-3'-fluor-1,1'-biphenyl-2-yl)-2-methyl-4-(difluormethyl)-1,3-thiazol-5-carboxamid |
| 63 | (1-2) Glufosinate | (6-34) Fenhexamid |
| 64 | (1-2) Glufosinate | (6-35) Carpropamid |
| 65 | (1-2) Glufosinate | (6-37) Fluopicolide |
| 66 | (1-2) Glufosinate | (6-44) N-{2-[3-Chlor-5-(trifluormethyl)pyridin-2-yl]ethyl}-2-(trifluormethyl) benzamid |
| 67 | (1-2) Glufosinate | (6-53) 3-Difluormethyl-1-methyl-1H-pyrazol-4-carbonsäure[2-(3,3-dimethyl-butyl)-phenyl]-amid |
| 68 | (1-2) Glufosinate | (7-4) Propineb |
| 69 | (1-2) Glufosinate | (8-4) Metalaxyl-M |
| 70 | (1-2) Glufosinate | (8-5) Benalaxyl-M |
| 71 | (1-2) Glufosinate | (9-3) Pyrimethanil |
| 72 | (1-2) Glufosinate | (10-3) Carbendazim |
| 73 | (1-2) Glufosinate | (11-4) Propamocarb-Fosetyl |
| 74 | (1-2) Glufosinate | (12-4) Iprodione |
| 75 | (1-2) Glufosinate | (14-2) Prochloraz |
| 76 | (1-2) Glufosinate | (14-3) Triazoxide |
| 77 | (1-2) Glufosinate | (16-2) Fludioxonil |
| 78 | (1-2) Glufosinate | (19-10) Spiroxamine |

(fortgesetzt)

| Nr. | Herbizid | Wirkstoff der Gruppe (2) bis (23) |
|---|---|---|
| 79 | (1-2) Glufosinate | (19-22) 2-(4-Chlorphenyl)-N-{2-[3-methoxy-4-(prop-2-in-1-yloxy)phenyl] ethyl}-2-(prop-2-in-1-yloxy)acetamid |
| 80 | (1-2) Glufosinate | (22-4) 5-Chlor-6-(2,4,6-trifluorphenyl)-7-(4-methylpiperidin-1-yl)[1,2,4] triazolo[1,5-a]pyrimidin |
| 81 | (1-3) Glufosinate-ammonium | (2-2) Fluoxastrobin |
| 82 | (1-3) Glufosinate-ammonium | (2-4) Trifloxystrobin |
| 83 | (1-3) Glufosinate-ammonium | (2-3) (2E)-2-(2-{[6-(3-Chlor-2-methylphenoxy)-5-fluor-4-pyrimidinyl]oxy} phenyl)-2-(methoxyimino)-N-methylethanamid |
| 84 | (1-3) Glufosinate-ammonium | (3-15) Prothioconazole |
| 85 | (1-3) Glufosinate-ammonium | (3-17) Tebuconazole |
| 86 | (1-3) Glufosinate-ammonium | (3-21) Bitertanol |
| 87 | (1-3) Glufosinate-ammonium | (3-22) Triadimenol |
| 88 | (1-3) Glufosinate-ammonium | (3-24) Fluquinconazole |
| 89 | (1-3) Glufosinate-ammonium | (4-1) Dichlofluanid |
| 90 | (1-3) Glufosinate-ammonium | (4-2) Tolylfluanid |
| 91 | (1-3) Glufosinate-ammonium | (5-1) Iprovalicarb |
| 92 | (1-3) Glufosinate-ammonium | (6-2) N-[2-(1,3-Dimethylbutyl)phenyl]-5-fluor-1,3-dimethyl-1H-pyrazol-4-carboxamid |
| 93 | (1-3) Glufosinate-ammonium | (6-8) 5-Fluor-1,3-dimethyl-N-[2-(1,3,3-trimethylbutyl)phenyl]-1H-pyrazol-4-carboxamid |
| 94 | (1-3) Glufosinate-ammonium | (6-13) N-[2-(1,3-Dimethylbutyl)phenyl]-2-iodbenzamid |
| 95 | (1-3) Glufosinate-ammonium | (6-15) N-[2-(1,3-Dimethylbutyl)phenyl]-2-(trifluormethyl)benzamid |
| 96 | (1-3) Glufosinate-ammonium | (6-18) Boscalid |
| 97 | (1-3) Glufosinate-ammonium | (6-21) Penthiopyrad |
| 98 | (1-3) Glufosinate-ammonium | (6-22) N-[2-(1,3-Dimethylbutyl)phenyl]-1-methyl-4-(trifluormethyl) 1H-pyrrol-3-carboxamid |
| 99 | (1-3) Glufosinate-ammonium | (6-23) N-(3',4'-Dichlor-5-fluor-1,1'-biphenyl-2-yl)-3-(difluormethyl)-1-methyl-1H-pyrazol-4-carboxamid |
| 100 | (1-3) Glufosinate-ammonium | (6-29) N-(4'-Brom-1,1'-biphenyl-2-yl)-4-(difluormethyl)-2-methyl-1,3-thiazol-5-carboxamid |
| 101 | (1-3) Glufosinate-ammonium | (6-31) N-(4'-Iod-1,1'-biphenyl-2-yl)-4-(difluormethyl)-2-methyl-1,3-thiazol-5-carboxamid |
| 102 | (1-3) Glufosinate-ammonium | (6-32) N-(4'-Chlor-3'-fluor-1,1'-biphenyl-2-yl)-2-methyl-4-(difluormethyl)-1,3-thiazol-5-carboxamid |
| 103 | (1-3) Glufosinate-ammonium | (6-34) Fenhexamid |
| 104 | (1-3) Glufosinate-ammonium | (6-35) Carpropamid |
| 105 | (1-3) Glufosinate-ammonium | (6-37) Fluopicolide |
| 106 | (1-3) Glufosinate-ammonium | (6-44) N-{2-[3-Chlor-5-(trifluormethyl)pyridin-2-yl]ethyl}-2-(trifluormethyl) benzamid |
| 107 | (1-3) Glufosinate-ammonium | (6-53) 3-Difluormethyl-1-methyl-1H-pyrazol-4-carbonsäure[2-(3,3-dimethyl-butyl)-phenyl]-amid |

(fortgesetzt)

| Nr. | Herbizid | Wirkstoff der Gruppe (2) bis (23) |
|---|---|---|
| 108 | (1-3) Glufosinate-ammonium | (7-4) Propineb |
| 109 | (1-3) Glufosinate-ammonium | (8-4) Metalaxyl-M |
| 110 | (1-3) Glufosinate-ammonium | (8-5) Benalaxyl-M |
| 111 | (1-3) Glufosinate-ammonium | (9-3) Pyrimethanil |
| 112 | (1-3) Glufosinate-ammonium | (10-3) Carbendazim |
| 113 | (1-3) Glufosinate-ammonium | (11-4) Propamocarb-Fosetyl |
| 114 | (1-3) Glufosinate-ammonium | (12-4) Iprodione |
| 115 | (1-3) Glufosinate-ammonium | (14-2) Prochloraz |
| 116 | (1-3) Glufosinate-ammonium | (14-3) Triazoxide |
| 117 | (1-3) Glufosinate-ammonium | (16-2) Fludioxonil |
| 118 | (1-3) Glufosinate-ammonium | (19-10) Spiroxamine |
| 119 | (1-3) Glufosinate-ammonium | (19-22) 2-(4-Chlorphenyl)-N-{2-[3-methoxy-4-(prop-2-in-1-yloxy)phenyl] ethyl}-2-(prop-2-in-1-yloxy)acetamid |
| 120 | (1-3) Glufosinate-ammonium | (22-4) 5-Chlor-6-(2,4,6-trifluorphenyl)-7-(4-methylpiperidin-1-yl)[1,2,4] triazolo[1,5-a]pyrimidin |

Zur Bekämpfung von Rost-Krankheiten an Soja-Pflanzen sind davon insbesondere die Mischungen mit folgenden Nummern bevorzugt: 1-2, 4-10, 12-22, 28, 31-32, 34-35, 37-38, 40-42, 44-50, 52-62, 68, 71-72, 74-75, 77-78, 80-82, 84-90, 92-102, 108, 111-112, 114-115, 117-118 und 120.

Die erfindungsgemäßen Wirkstoffkombinationen enthalten neben einem Wirkstoff der Gruppe (1) mindestens einen Wirkstoff von den Verbindungen der Gruppen (2) bis (23). Sie können darüber hinaus auch weitere fungizid wirksame Zumischkomponenten enthalten.

So kann beispielsweise jede der in Tabelle 1 genannten Wirkstoffkombinationen einen dritten Wirkstoff enthalten, der aus folgender Liste ausgewählt ist:

(2-1) Azoxystrobin, (2-2) Fluoxastrobin, (2-3) (2*E*)-2-(2-{[6-(3-Chlor-2-methylphenoxy)-5-fluor-4-pyrimidinyl]oxy}phenyl)-2-(methoxyimino)-*N*-methylethanamid, (2-4) Trifloxystrobin, (2-5) (2*E*)-2-(Methoxyimino)-*N*-methyl-2-(2-{[({(1*E*)-1-[3-(trifluormethyl)phenyl]ethyliden}amino)oxy]methyl}phenyl)ethanamid, (2-6) (2*E*)-2-(Methoxyimino)-*N*-methyl-2-{2-[(*E*)-({1-[3-(trifluormethyl)phenyl]ethoxy}imino)methyl]phenyl}-ethanamid, (2-7) Orysastrobin, (2-8) 5-Methoxy-2-methyl-4-(2-{[({(1*E*)-1-[3-(trifluormethyl)phenyl]ethyliden}amino)oxy]methyl}phenyl)-2,4-dihydro-3*H*-1,2,4-triazol-3-on, (2-9) Kresoxim-methyl, (2-10) Dimoxystrobin, (2-11) Picoxystrobin, (2-12) Pyraclostrobin, (2-13) Metominostrobin, (2-14) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (2-15) Enestroburin, (3-1) Azaconazole, (3-2) Etaconazole, (3-3) Propiconazole, (3-4) Difenoconazole, (3-5) Bromuconazole, (3-6) Cyproconazole, (3-7) Hexaconazole, (3-8) Penconazole, (3-9) Myclobutanil, (3-10) Tetraconazole, (3-11) Flutriafol, (3-12) Epoxiconazole, (3-13) Flusilazole, (3-14) Simeconazole, (3-15) Prothioconazole, (3-16) Fenbuconazole, (3-17) Tebuconazole, (3-18) Ipconazole, (3-19) Metconazole, (3-20) Triticonazole, (3-21) Bitertanol, (3-22) Triadimenol, (3-23) Triadimefon, (3-24) Fluquinconazole, (3-25) Quinconazole, (3-26) Amisulbrom, (4-1) Dichlofluanid, (4-2) Tolylfluanid, (4-3) N-(4-Chlor-2-nitrophenyl)N-ethyl-4-methyl-benzolsulfonamid, (5-1) Iprovalicarb, (5-2) $N^1$-[2-(4-{[3-(4-chlorophenyl)-2-propynyl]oxy}-3-methoxyphenyl)ethyl]-$N^2$-(methylsulfonyl)-D-valinamid, (5-3) Benthiavalicarb, (6-1) *N*-[2-(1,3-Dimethylbutyl)phenyl]-1,3-dimethyl-1*H*-pyrazol-4-carboxamid, (6-2) *N*-[2-(1,3-Dimethylbutyl)phenyl]-5-fluor-1,3-dimethyl-1*H*-pyrazol-4-carboxamid, (6-3) *N*-[2-(1,3-Dimethylbutyl)phenyl]-5-chlor-1,3-dimethyl-1*H*-pyrazol-4-carboxamid, (6-4) 3-(Difluormethyl)-*N*-[2-(1,3-dimethylbutyl)phenyl]-1-methyl-1*H*-pyrazol-4-carboxamid, (6-5) 3-(Trifluormethyl)-*N*-[2-(1,3-dimethylbutyl)phenyl]-5-fluor-1-methyl-1*H*-pyrazol-4-carboxamid, (6-6) 3-(Trifluormethyl)-*N*-[2-(1,3-dimethylbutyl)phenyl]-5-chlor-1-methyl-1*H*-pyrazol-4-carboxamid, (6-7) 1,3-Dimethyl-*N*-[2-(1,3,3-trimethylbutyl)phenyl]-1*H*-pyrazol-4-carboxamid, (6-8) 5-Fluor-1,3-dimethyl-*N*-[2-(1,3,3-trimethylbutyl)phenyl]-1*H*-pyrazol-4-carboxamid, (6-9) 3-(Difluormethyl)-1-methyl-*N*-[2-(1,3,3-trimethylbutyl)phenyl]-1*H*-pyrazol-4-carboxamid, (6-10) 3-(Trifluormethyl)-1-methyl-*N*-[2-(1,3,3-trimethyl-butyl)phenyl]-1*H*-pyrazol-4-carboxamid, (6-11) 3-(Trifluormethyl)-5-fluor-1-methyl-*N*-[2-(1,3,3-trimethylbutyl)phenyl]-1*H*-pyrazol-4-carboxamid, (6-12) 3-(Trifluormethyl)-5-chlor-1-methyl-*N*-[2-(1,3,3-trimethylbutyl)-phenyl]-1*H*-pyrazol-4-carboxamid, (6-13) *N*-[2-(1,3-Dimethylbutyl)phenyl]-2-iodbenzamid, (6-14) 2-Iod-*N*-[2-(1,3,3-trimethylbutyl)phenyl]benzamid, (6-15) *N*-[2-(1,3-Dimethylbutyl)phenyl]-2-(trifluormethyl)benzamid, (6-16) 2-(Trifluormethyl)-*N*-[2-(1,3,3-trimethylbutyl)phenyl]benzamid, (6-17) 2-Chloro-N-(1,1,3-trimethyl-indan-4-yl)-nicotinamid, (6-18) Boscalid, (6-19) Furametpyr, (6-20) 1-Methyl-3-trifluormethyl-1H-pyrazol-4-carbonsäure-(3-p-tolyl-thiophen-2-yl)-amid, (6-21) Penthiopyrad, (6-22) *N*-[2-(1,3-Dimethylbutyl)-phenyl]-1-methyl-4-(trifluormethyl)-1*H*-pyrrol-3-carboxamid, (6-23) *N*-(3',4'-Dichlor-5-fluor-1,1'-biphenyl-2-yl)-3-(difluormethyl)-1-methyl-1*H*-pyrazol-4-carboxamid, (6-24) 3-(Difluormethyl)-*N*-{3'-fluor-4'-[(*E*)-(methoxyimino)methyl]-1,1'-biphenyl-2-yl}-1-methyl-1*H*-pyrazol-4-carboxamid, (6-25) 3-(Trifluormethyl)-*N*-{3'-fluor-4'-[(*E*)-(methoxyimino)methyl]-1,1'-biphenyl-2-yl}-1-methyl-1*H*-pyrazol-4-carboxamid, (6-26) *N*-(3',4'-Dichlor-1,1'-biphenyl-2-yl)-5-fluor-1,3-dimethyl-1*H*-pyrazol-4-carboxamid, (6-27) *N*-(4'-Chlor-3'-fluor-1,1'-biphenyl-2-yl)-2-methyl-4-(trifluormethyl)-1,3-thiazol-5-carboxamid, (6-28) *N*-(4'-Chlor-1,1'-biphenyl-2-yl)-4-(difluormethyl)-2-methyl-1,3-thiazol-5-carboxamid, (6-29) *N*-(4'-Brom-1,1'-biphenyl-2-yl)-4-(difluormethyl)-2-methyl-1,3-thiazol-5-carboxamid, (6-30) 4-(Difluormethyl)-2-methyl-*N*-[4'-(trifluormethyl)-1,1'-biphenyl-2-yl]-1,3-thiazol-5-carboxamid, (6-31) *N*-(4'-Iod-1,1'-biphenyl-2-yl)-4-(difluormethyl)-2-methyl-1,3-thiazol-5-carboxamid, (6-32) *N*-(4'-Chlor-3'-fluor-1,1'-biphenyl-2-yl)-2-methyl-4-(difluormethyl)-1,3-thiazol-5-carboxamid, (6-33) Ethaboxam, (6-34) Fenhexamid, (6-35) Carpropamid, (6-36) 2-Chlor-4-(2-fluor-2-methyl-propionylamino)-N,N-dimethyl-benzamid, (6-37) Fluopicolide, (6-38) Zoxamide, (6-39) 3,4-Dichlor-N-(2-cyanophenyl)isothiazol-5-carboxamid, (6-40) Carboxin, (6-41) Tiadinil, (6-42) Silthiofam, (6-43) *N*-[2-(1,3-Dimethylbutyl)phenyl]-1-methyl-4-(trifluormethyl)-1*H*-pyrrol-3-carboxamid, (6-44) *N*-{2-[3-Chlor-5-(trifluormethyl)pyridin-2-yl]ethyl}-2-(trifluormethyl)benzamid, (6-45) 1-Methyl-3-trifluormethyl-1H-pyrazol-4-carbonsäure-(2-bicyclopropyl-2-yl-phenyl)-amid, (6-46) 1-Methyl-3-difluormethyl-1H-pyrazol-4-carbonsäure-(2-bicyclopropyl-2-yl-phenyl)-amid, (6-47) 1-Methyl-3-trifluormethyl-1H-pyrazol-4-carbonsäure-[2-(1'-methyl-bicyclopropyl-2-yl)-phenyl]-amid, (6-48) 1-Methyl-3-difluormethyl-1H-pyrazol-4-carbonsäure-[2-(1'-methyl-bicyclopropyl-2-yl)-phenyl]-amid, (6-49) N-[1-(5-Brom-3-chlorpyridin-2-yl)ethyl]-2,4-dichlornicotin-amid, (6-50) N-(5-Brom-3-chlorpyridin-2-yl)methyl-2,4-dichlomicotinamid, (6-51) *N*-(3',4'-Dichlor-5-fluor-1,1'-biphenyl-2-yl)-3-(difluormethyl)-1-methyl-1*H*-pyrazol-4-carboxamid, (6-52) *N*-(3',4'-Dichlor-5-fluor-1,1'-biphenyl-2-yl)-3-(difluormethyl)-1-methyl-1*H*-pyrazol-4-carboxamid, (6-53) 3-Difluormethyl-1-methyl-1H-pyrazol-4-carbonsäure[2-(3,3-dimethyl-butyl)-phenyl]-amid, (7-1) Mancozeb, (7-2) Maneb, (7-3) Metiram, (7-4) Propineb, (7-5) Thiram, (7-6) Zineb, (7-7) Ziram, (8-1) Benalaxyl, (8-2) Furalaxyl, (8-3) Metalaxyl, (8-4) Metalaxyl-M, (8-5) Benalaxyl-M, (9-1) Cyprodinil, (9-2) Mepanipyrim, (9-3) Pyrimethanil, (10-1) 6-Chlor-5-[(3,5-dimethylisoxazol-4-yl)sulfonyl]-2,2-difluor-5H-[1,3]dioxolo[4,5-f]benzimidazol, (10-2) Benomyl, (10-3) Carbendazim, (10-4) Chlorfenazole, (10-5) Fuberidazole, (10-6) Thiabendazole, (11-1) Diethofencarb, (11-2) Propamocarb, (11-3) Propamocarb-hydrochloride, (11-4) Propamocarb-Fosetyl, (12-1) Captafol, (12-2) Captan, (12-3) Folpet, (12-4) Iprodione, (12-5) Procymidone, (12-6) Vinclozolin, (13-1) Dodine, (13-2) Guazatine, (13-3) Iminoctadine triacetate, (13-4) Iminoctadine tris(albesilate), (14-1) Cyazofamid, (14-2) Prochloraz, (14-3) Triazoxide, (14-4) Pefurazoate, (15-1) Aldimorph, (15-2) Tridemorph, (15-3) Dodemorph, (15-4) Fenpropimorph, (15-5) Dimethomorph, (15-6) Flumorph, (16-1) Fenpiclonil, (16-2) Fludioxonil, (16-3) Pyrrolnitrine, (17-1) Fosetyl-Al, (17-2) Phosphonic acid, (18-1) 2-(2,3-Dihydro-1H-inden-5-yl)-N-[2-(3,4-dimethoxyphenyl)ethyl]-2-(methoxyimino)acetamid, (18-2) N-[2-(3,4-Dimethoxyphenyl)ethyl]-2-(methoxyimino)-2-(5,6,7,8-tetrahydronaphthalen-2-yl)acetamid, (18-3) 2-(4-Chlorphenyl)-N-[2-(3,4-dimethoxyphenyl)-ethyl]-2-(methoxyimino)acetamid, (18-4) 2-(4-Bromphenyl)-N-[2-(3,4-dimethoxyphenyl)ethyl]-2-(methoxyimino) acetamid, (18-5) 2-(4-Methylphenyl)-N-[2-(3,4-dimethoxyphenyl)ethyl]-2-(methoxyimino)acetamid, (18-6) 2-(4-Ethylphenyl)-N-[2-(3,4-dimethoxyphenyl)ethyl]-2-(methoxyimino)acetamid, (19-1) Acibenzolar-S-methyl, (19-2) Chlorothalonil, (19-3) Cymoxanil, (19-4) Edifenphos, (19-5) Famoxadone, (19-6) Fluazinam, (19-7) Kupferoxychlorid, (19-9) Oxadixyl, (19-10) Spiroxamine, (19-11) Dithianon, (19-12) Metrafenone, (19-13) Fenamidone, (19-14) 2,3-Dibutyl-6-chlor-thieno [2,3-d]pyrimidin-4(3H)on, (19-15) Probenazole, (19-16) Isoprothiolane, (19-17) Kasugamycin, (19-18) Phthalide, (19-19) Ferimzone, (19-20) Tricyclazole, (19-21) N-({4-[(Cyclopropylamino)carbonyl]phenyl}sulfonyl)-2-methoxybenzamid, (19-22) 2-(4-Chlorphenyl)-N-{2-[3-methoxy-4-(prop-2-in-1-yloxy)phenyl]ethyl}-2-(prop-2-in-1-yloxy)acetamid, (19-23) Proquinazid, (19-24) Quinoxyfen, (19-25) Cyflufenamid, (19-26) Pyribencarb, (19-27) 3-[5-(4-Chlorphenyl)-2,3-dimethyl-3-isoxazolidinyl]-pyridin (20-1) Pencycuron, (20-2) Thiophanate-methyl, (20-3) Thiophanate-ethyl, (21-1) Fenoxanil, (21-2) Diclocymet, (22-1) 5-Chlor-*N*-[*(1S)*-2,2,2-trifluor-1-methylethyl]-6-(2,4,6-trifluorphenyl)[1,2,4]triazolo[1,5-a]pyrimidin-7-amin, (22-2) 5-Chlor-*N*-[*(1R)*-1,2-dimethylpropyl]-6-(2,4,6-trifluorphenyl)[1,2,4]triazolo[1,5-a]pyrimidin-7-amin, (22-3) 5-Chlor-6-(2-chlor-6-fluorphenyl)-7-(4-methylpiperidin-1-yl)[1,2,4]triazolo[1,5-a]pyrimidin, (22-4) 5-Chlor-6-(2,4,6-trifluorphenyl)-7-(4-methylpiperidin-1-yl)[1,2,4]triazolo[1,5-a]pyrimidin, (23-1) 2-Butoxy-6-iod-3-propyl-benzopyran-4-on, (23-2) 2-Ethoxy-6-iod-3-propyl-benzopyran-4-on, (23-3) 6-Iod-2-propoxy-3-propyl-benzopyran-4-on, (23-4) 2-But-2-inyloxy-6-iod-3-propylbenzopyran-4-on, (23-5) 6-Iod-2-(1-methyl-butoxy)-3-propyl-benzopyran-4-on, (23-6) 2-But-3-enyloxy-6-iodbenzopyran-4-on, (23-7) 3-Butyl-6-iod-2-isopropoxy-benzopyran-4-on.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im Allgemeinen enthalten die erfindungsgemäßen Kombinationen Wirkstoffe der Formel (I) und einen Mischpartner aus einer der Gruppen (2) bis (23) in den in der nachfolgenden Tabelle 2 beispielhaft angegebenen Mischungsverhältnisse.

Die Mischungsverhältnisse basieren auf Gewichtsverhältnissen. Das Verhältnis ist zu verstehen als Wirkstoff der Gruppe (1) : Mischpartner.

Tabelle 2: Mischungsverhältnisse

| Mischpartner | | bevorzugtes Mischungsverhältnis | besonders bevorzugtes Mischungsverhältnis |
|---|---|---|---|
| Gruppe (2): | Strobilurine | 1 : 100 bis 1 : 0,01 | 1 : 5 bis 1 : 0,01 |
| Gruppe (3): | Triazole | 1 : 100 bis 1 : 0,01 | 1 : 5 bis 1 : 0,01 |
| Gruppe (4): | Sulfenamide/Sulfonamide | 1 : 100 bis 1 : 0,01 | 1 : 10 bis 1 : 0,1 |
| Gruppe (5): | Valinamide | 1 : 100 bis 1 : 0,01 | 1 : 5 bis 1 : 0,01 |
| Gruppe (6): | Carboxamide | 1 : 100 bis 1 : 0,01 | 1 : 5 bis 1 : 0,01 |
| Gruppe (7): | Dithiocarbamate | 1 : 100 bis 1 : 0,01 | 1 : 25 bis 1 : 0,2 |
| Gruppe (8): | Acylalanine | 1 : 100 bis 1 : 0,01 | 1 : 12 bis 1 : 0,02 |
| Gruppe (9): | Anilino-pyrimidine | 1 : 100 bis 1 : 0,01 | 1 : 10 bis 1 : 0,05 |
| Gruppe (10): | Benzimidazole | 1 : 100 bis 1 : 0,01 | 1 : 5 bis 1 : 0,01 |
| Gruppe (11): | Carbamate ohne (11-1) | 1 : 100 bis 1 : 0,01 | 1 : 100 bis 1 : 0,2 |
| (11-1): | Diethofencarb | 1:100 bis 1 : 0,01 | 1:5 bis 1 : 0,01 |
| Gruppe (12): | (12-1)/(12-2)/(12-3) | 1 : 100 bis 1 : 0,01 | 1 : 25 bis 1 : 0,2 |
| Gruppe (12): | (12-4)/(12-5)/(12-6) | 1 : 100 bis 1 : 0,01 | 1 : 10 bis 1 : 0,05 |
| Gruppe (13): | Guanidine | 1 : 100 bis 1 : 0,01 | 1 : 10 bis 1 : 0,01 |
| Gruppe (14): | Imidazole | 1 : 100 bis 1 : 0,01 | 1 : 5 bis 1 : 0,01 |
| Gruppe (15): | Morpholine | 1 : 100 bis 1 : 0,01 | 1 : 5 bis 1 : 0,01 |
| Gruppe (16): | Pyrrole | 1 : 100 bis 1 : 0,01 | 1 : 5 bis 1 : 0,01 |
| Gruppe (17): | Phosphonate | 1 : 100 bis 1 : 0,01 | 1 : 25 bis 1 : 0,2 |
| Gruppe (18): | Phenylethanamide | 1 : 100 bis 1 : 0,01 | 1 : 5 bis 1 : 0,01 |
| (19-1): | Acibenzolar-S-methyl | 1 : 100 bis 1 : 0,01 | 1 : 5 bis 1 : 0,01 |
| (19-2): | Chlorothalonil | 1 : 100 bis 1 : 0,01 | 1 : 25 bis 1 : 0,2 |
| (19-3): | Cymoxanil | 1 : 100 bis 1 : 0,01 | 1 : 5 bis 1 : 0,01 |
| (19-4): | Edifenphos | 1 : 100 bis 1 : 0,01 | 1 : 5 bis 1 : 0,01 |
| (19-5): | Famoxadone | 1 : 100 bis 1 : 0,01 | 1 : 5 bis 1 : 0,01 |
| (19-6): | Fluazinam | 1 : 100 bis 1 : 0,01 | 1 : 5 bis 1 : 0,01 |
| (19-7): | Kupferoxychlorid | 1 : 100 bis 1 : 0,01 | 1 : 100 bis 1 : 0,2 |
| (19-8): | Kupferhydroxid | 1 : 100 bis 1 : 0,01 | 1 : 100 bis 1 : 0,2 |
| (19-9): | Oxadixyl | 1 : 100 bis 1 : 0,01 | 1 : 12 bis 1 : 0,02 |
| (19-10): | Spiroxamine | 1 : 100 bis 1 : 0,01 | 1 : 5 bis 1 : 0,01 |
| (19-11) | Dithianon | 1:100 bis 1 : 0,01 | 1 : 5 bis 1 : 0,01 |
| (19-12) | Metrafenone | 1 : 100 bis 1 : 0,01 | 1 : 5 bis 1 : 0,01 |
| (19-13) | Fenamidone | 1 : 100 bis 1 : 0,01 | 1 : 5 bis 1: 0,01 |
| (19-14): | 2,3-Dibutyl-6-chlor-thieno[2,3-d]-pyrimidin-4(3H)on | 1 : 100 bis 1 : 0,01 | 1 : 5 bis 1 : 0,01 |
| (19-15): | Probenazole | 1 : 100 bis 1 : 0,01 | 1 : 100 bis 1 : 0,2 |
| (19-16): | Isoprothiolane | 1 : 100 bis 1 : 0,01 | 1 : 100 bis 1 : 0,2 |
| (19-17): | Kasugamycin | 1 : 100 bis 1 : 0,01 | 1 : 5 bis 1 : 0,01 |

(fortgesetzt)

| Mischpartner | | bevorzugtes Mischungsverhältnis | besonders bevorzugtes Mischungsverhältnis |
|---|---|---|---|
| (19-18): | Phthalide | 1 : 100 bis 1 : 0,01 | 1 : 100 bis 1 : 0,2 |
| (19-19): | Ferimzone | 1 : 100 bis 1 : 0,01 | 1 : 5 bis 1: 0,01 |
| (19-20): | Tricyclazole | 1 : 100 bis 1 : 0,01 | 1 : 5 bis 1 :0,01 |
| (19-21): | N-({4-[(Cyclopropylamino)-carbonyl] phenyl}sulfonyl)-2-methoxybenzamid | 1 : 100 bis 1 : 0,01 | 1:100 bis 1:0,2 |
| (19-22): | 2-(4-Chlorphenyl)-N-{2-[3-methoxy-4-(prop-2-in-1-yloxy) phenyl]ethyl}-2-(prop-2-in-1-yloxy)acetamid | 1 : 100 bis 1 : 0,01 | 1 : 5 bis 1 :0,01 |
| (19-23): | Proquinazid | 1 : 100 bis 1 : 0,01 | 1 : 5 bis 1 : 0,01 |
| (19-24): | Quinoxyfen | 1 : 100 bis 1 : 0,01 | 1 : 5 bis 1 : 0,01 |
| (19-25) | Cyflufenamid | 1 : 100 bis 1 : 0,01 | 1 : 100 bis 1 : 0,2 |
| (19-26) | Pyribencarb | 1 : 100 bis 1 : 0,01 | 1 : 100 bis 1 : 0,2 |
| (19-27) | 3-[5-(4-Chlorphenyl)-2,3-dimethyl-3-isoxazolidinyl]-pyridin | 1 : 100 bis 1 : 0,01 | 1 : 100 bis 1 : 0,2 |
| Gruppe | (20): (Thio)Harnstoff-Derivate | 1 : 100 bis 1 : 0,01 | 1 : 5 bis 1 : 0,01 |
| Gruppe | (21): Amide | 1 : 100 bis 1 : 0,01 | 1 : 5 bis 1 : 0,01 |
| Gruppe | (22): Triazolopyrimidine | 1 : 100 bis 1 : 0,01 | 1 : 5 bis 1 : 0,01 |
| Gruppe | (23): Iodochromone | 1 : 100 bis 1 : 0,01 | 1 : 5 bis 1 : 0,01 |

Das Mischungsverhältnis ist in jedem Fall so zu wählen, dass eine synergistische Mischung erhalten wird. Die Mischungsverhältnisse zwischen der Verbindung der Formel (I) und einer Verbindung aus einer der Gruppen (2) bis (23) kann auch zwischen den einzelnen Verbindungen einer Gruppe variieren.

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Beispielhaft aber nicht begrenzend seien einige Erreger von pilzlichen und bakteriellen Erkrankungen, die unter die oben aufgezählten Oberbegriffe fallen, genannt:

Erkrankungen, hervorgerufen durch Erreger des Echten Mehltaus wie z.B.
Blumeria-Arten, wie beispielsweise Blumeria graminis;
Podosphaera-Arten, wie beispielsweise Podosphaera leucotricha;
Sphaerotheca-Arten, wie beispielsweise Sphaerotheca fuliginea;
Uncinula-Arten, wie beispielsweise Uncinula necator;

Erkrankungen, hervorgerufen durch Erreger von Rostkrankheiten wie z.B.
Gymnosporangium-Arten, wie beispielsweise Gymnosporangium sabinae
Hemileia-Arten, wie beispielsweise Hemileia vastatrix;
Phakopsora-Arten, wie beispielsweise Phakopsora pachyrhizi und Phakopsora meibomiae;
Puccinia-Arten, wie beispielsweise Puccinia recondita;
Uromyces-Arten, wie beispielsweise Uromyces appendiculatus;

Erkrankungen, hervorgerufen durch Erreger der Gruppe der Oomyceten wie z.B. Bremia-Arten, wie beispielsweise Bremia lactucae;
Peronospora-Arten, wie beispielsweise Peronospora pisi oder P. brassicae;

Phytophthora-Arten, wie beispielsweise Phytophthora infestans;
Plasmopara-Arten, wie beispielsweise Plasmopara viticola;
Pseudoperonospora-Arten, wie beispielsweise Pseudoperonospora humuli oder Pseudoperonospora cubensis;
Pythium-Arten, wie beispielsweise Pythium ultimum;
Blattfleckenkrankheiten und Blattwelken, hervorgerufen durch z.B. Alternaria-Arten, wie beispielsweise Alternaria solani;
Cercospora-Arten, wie beispielsweise Cercospora beticola;
Cladiosporum-Arten, wie beispielsweise Cladiosporium cucumerinum;
Cochliobolus-Arten, wie beispielsweise Cochliobolus sativus
(Konidienform: Drechslera, Syn: Helminthosporium);
Colletotrichum-Arten, wie beispielsweise Colletotrichum lindemuthanium;
Cycloconium-Arten, wie beispielsweise Cycloconium oleaginum;
Diaporthe-Arten, wie beispielsweise Diaporthe citri;
Elsinoe-Arten, wie beispielsweise Elsinoe fawcettii;
Gloeosporium-Arten, wie beispielsweise Gloeosporium laeticolor;
Glomerella-Arten, wie beispielsweise Glomerella cingulata;
Guignardia-Arten, wie beispielsweise Guignardia bidwelli;
Leptosphaeria-Arten, wie beispielsweise Leptosphaeria maculans;
Magnaporthe-Arten, wie beispielsweise Magnaporthe grisea;
Mycosphaerella-Arten, wie beispielsweise Mycosphaerelle graminicola;
Phaeosphaeria-Arten, wie beispielsweise Phaeosphaeria nodorum;
Pyrenophora-Arten, wie beispielsweise Pyrenophora teres;
Ramularia-Arten, wie beispielsweise Ramularia collo-cygni;
Rhynchosporium-Arten, wie beispielsweise Rhynchosporium secalis;
Septoria-Arten, wie beispielsweise Septoria apii;
Typhula-Arten, wie beispielsweise Typhula incarnata;
Venturia-Arten, wie beispielsweise Venturia inaequalis;

Wurzel- und Stengelkrankheiten, hervorgerufen durch z.B. Corticium-Arten, wie beispielsweise Corticium graminearum;
Fusarium-Arten, wie beispielsweise Fusarium oxysporum;
Gaeumannomyces-Arten, wie beispielsweise Gaeumannomyces graminis;
Rhizoctonia-Arten, wie beispielsweise Rhizoctonia solani;
Tapesia-Arten, wie beispielsweise Tapesia acuformis;
Thielaviopsis-Arten, wie beispielsweise Thielaviopsis basicola;

Ähren- und Rispenerkrankungen (inklusive Maiskolben), hervorgerufen durch z.B. Alternaria-Arten, wie beispielsweise Alternaria spp.;
Aspergillus-Arten, wie beispielsweise Aspergillus flavus;
Cladosporium-Arten, wie beispielsweise Cladosporium spp.;
Claviceps-Arten, wie beispielsweise Claviceps purpurea;
Fusarium-Arten, wie beispielsweise Fusarium culmorum;
Gibberella-Arten, wie beispielsweise Gibberella zeae;
Monographella-Arten, wie beispielsweise Monographella nivalis;

Erkrankungen, hervorgerufen durch Brandpilze wie z.B. Sphacelotheca-Arten, wie beispielsweise Sphacelotheca reiliana;
Tilletia-Arten, wie beispielsweise Tilletia caries;
Urocystis-Arten, wie beispielsweise Urocystis occulta;
Ustilago-Arten, wie beispielsweise Ustilago nuda;

Fruchtfäule hervorgerufen durch z.B. Aspergillus-Arten, wie beispielsweise Aspergillus flavus;
Botrytis-Arten, wie beispielsweise Botrytis cinerea;
Penicillium-Arten, wie beispielsweise Penicillium expansum;
Sclerotinia-Arten, wie beispielsweise Sclerotinia sclerotiorum;
Verticilium-Arten, wie beispielsweise Verticilium alboatrum;

Samen- und bodenbürtige Fäulen und Welken, sowie Sämlingserkrankungen, hervorgerufen durch z.B. Fusarium-Arten, wie beispielsweise Fusarium culmorum;
Phytophthora Arten, wie beispielsweise Phytophthora cactorum;
Pythium-Arten, wie beispielsweise Pythium ultimum;
Rhizoctonia-Arten, wie beispielsweise Rhizoctonia solani;
Sclerotium-Arten, wie beispielsweise Sclerotium rolfsii;

Krebserkrankungen, Gallen und Hexenbesen, hervorgerufen durch z.B. Nectria-Arten, wie beispielsweise Nectria galligena;
Welkeerkrankungen hervorgerufen durch z.B.
Monilinia-Arten, wie beispielsweise Monilinia laxa;

Deformationen von Blättern, Blüten und Früchten, hervorgerufen durch z.B. Taphrina-Arten, wie beispielsweise Taphrina deformans;

Degenerationserkrankungen holziger pflanzen, hervorgerufen durch z.B. Esca-Arten, wie beispielsweise Phaemoniella clamydospora;

Blüten- und Samenerkrankungen, hervorgerufen durch z.B. Botrytis-Arten, wie beispielsweise Botrytis cinerea;

Erkrankungen von Pflanzenknollen, hervorgerufen durch z.B. Rhizoctonia-Arten, wie beispielsweise Rhizoctonia solani;

Erkrankungen, hervorgerufen durch bakterielle Erreger wie z.B. Xanthomonas-Arten, wie beispielsweise Xanthomonas campestris pv. oryzae;
Pseudomonas-Arten, wie beispielsweise Pseudomonas syringae pv. lachrymans;
Erwinia-Arten, wie beispielsweise Erwinia amylovora;

Bevorzugt können die folgenden Krankheiten von Soja-Bohnen bekämpft werden:
Pilzkrankheiten an Blättern, Stängeln, Schoten und Samen verursacht durch z.B.
Alternaria leaf spot (Alternaria spec. atrans tenuissima), Anthracnose (Colletotrichum gloeosporoides dematium var. truncatum), Brown spot (Septoria glycines), Cercospora leaf spot and blight (Cercospora kikuchii), Choanephora leaf blight (Choanephora infundibulifera trispora (Syn.)), Dactuliophora leaf spot (Dactuliophora glycines), Downy Mildew (Peronospora manshurica), Drechslera blight (Drechslera glycini), Frogeye Leaf spot (Cercospora sojina), Leptosphaerulina Leaf Spot (Leptosphaerulina trifolii), Phyllostica Leaf Spot (Phyllosticta sojaecola), Powdery Mildew (Microsphaera diffusa), Pyrenochaeta Leaf Spot (Pyrenochaeta glycines), Rhizoctonia Aerial, Foliage, and Web Blight (Rhizoctonia solani), Rust (Phakopsora pachyrhizi), Scab (Sphaceloma glycines), Stemphylium Leaf Blight (Stemphylium botryosum), Target Spot (Corynespora cassiicola)

Pilzkrankheiten an Wurzeln und der Stängelbasis verursacht durch z.B.
Black Root Rot (Calonectria crotalariae), Charcoal Rot (Macrophomina phaseolina), Fusarium Blight or Wilt, Root Rot, and Pod and Collar Rot (Fusarium oxysporum, Fusarium orthoceras, Fusarium semitectum, Fusarium equiseti), Mycoleptodiscus Root Rot (Mycoleptodiscus terrestris), Neocosmospora (Neocosmopspora vasinfecta), Pod and Stem Blight (Diaporthe phaseolorum), Stem Canker (Diaporthe phaseolorum var. caulivora), Phytophthora Rot (Phytophthora megasperma), Brown Stem Rot (Phialophora gregata), Pythium Rot (Pythium aphanidermatum, Pythium irregulare, Pythium debaryanum, Pythium myriotylum, Pythium ultimum), Rhizoctonia Root Rot, Stem Decay, and Damping-Off (Rhizoctonia solani), Sclerotinia Stem Decay (Sclerotinia sclerotiorum), Sclerotinia Southern Blight (Sclerotinia rolfsii), Thielaviopsis Root Rot (Thielaviopsis basicola).

Die erfindungsgemäßen Wirkstoffkombinationen eignen sich insbesondere zur Bekämpfung von Erkrankungen, die durch Erreger von Rostkrankheiten wie z.B. Phakopsora-Arten, wie beispielsweise Phakopsora pachyrhizi und Phakopsora meibomiae, hervorgerufen werden.

Bevorzugt können die folgenden Krankheiten von Soja-Bohnen bekämpft werden:
Pilzkrankheiten an Blättern, Stängeln, Schoten und Samen verursacht durch Rost (Phakopsora pachyrhizi und Phakopsora meibomiae). Insbesondere ist die Bekämpfung von Phakopsora pachyrhizi bevorzugt.

Die gute Pflanzenverträglichkeit der Wirkstoffkombinationen in den zur Bekämpfung von Pflanzenkrankheiten notwendigen Konzentrationen erlaubt eine Behandlung von ganzen Pflanzen (oberirdische Pflanzenteile und Wurzeln), von Pflanz- und Saatgut, und des Bodens. Die erfindungsgemäßen Wirkstoffkombinationen können zur Blattapplikation oder auch als Beizmittel eingesetzt werden.

Ein großer Teil des durch phytopathogene Pilze verursachten Schadens an Kulturpflanzen entsteht bereits durch den Befall des Saatguts während der Lagerung und nach dem Einbringen des Saatguts in den Boden sowie

während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von phytopathogenen Pilzen, die Pflanzen nach dem Auflaufen schädigen, erfolgt in erster Linie durch die Behandlung des Bodens und der oberirdischen Pflanzenteile mit Pflanzenschutzmitteln. Aufgrund der Bedenken hinsichtlich eines möglichen Einflusses der Pflanzenschutzmittel auf die Umwelt und die Gesundheit von Menschen und Tieren gibt es Anstrengungen, die Menge der ausgebrachten Wirkstoffe zu vermindern.

Die Bekämpfung von phytopathogenen Pilzen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen oder zumindest deutlich verringern. Es ist weiterhin erstrebenswert, die Menge des eingesetzten Wirkstoffs dahingehend zu optimieren, dass das Saatgut und die keimende Pflanze vor dem Befall durch phytopathogene Pilze bestmöglich geschützt wird, ohne jedoch die Pflanze selbst durch den eingesetzten Wirkstoff zu schädigen. Insbesondere sollten Verfahren zur Behandlung von Saatgut auch die intrinsischen fungiziden Eigenschaften transgener Pflanzen einbeziehen, um einen optimalen Schutz des Saatguts und der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von phytopathogenen Pilzen, indem das Saatgut mit einem erfindungsgemäßen Mittel behandelt wird.

Die Erfindung bezieht sich ebenfalls auf die Verwendung der erfindungsgemäßen Mittel zur Behandlung von Saatgut zum Schutz des Saatguts und der keimenden Pflanze vor phytopathogenen Pilzen.

Weiterhin bezieht sich die Erfindung auf Saatgut, welches zum Schutz vor phytopathogenen Pilzen mit einem erfindungsgemäßen Mittel behandelt wurde.

Einer der Vorteile der vorliegenden Erfindung ist es, dass aufgrund der besonderen systemischen Eigenschaften der erfindungsgemäßen Mittel die Behandlung des Saatguts mit diesen Mitteln nicht nur das Saatgut selbst, sondern auch die daraus hervorgehenden Pflanzen nach dem Auflaufen vor phytopathogenen Pilzen schützt. Auf diese Weise kann die unmittelbare Behandlung der Kultur zum Zeitpunkt der Aussaat oder kurz danach entfallen.

Ebenso ist es als vorteilhaft anzusehen, dass die erfindungsgemäßen Mischungen insbesondere auch bei transgenem Saatgut eingesetzt werden können.

Die erfindungsgemäßen Mittel eignen sich zum Schutz von Saatgut jeglicher Pflanzensorte, die in der Landwirtschaft, im Gewächshaus, in Forsten oder im Gartenbau eingesetzt wird. Insbesondere handelt es sich dabei um Saatgut von Getreide (wie Weizen, Gerste, Roggen, Hirse und Hafer), Mais, Baumwolle, Soja, Reis, Kartoffeln, Sonnenblume, Bohne, Kaffee, Rübe (z.B. Zuckerrübe und Futterrübe), Erdnuss, Gemüse (wie Tomate, Gurke, Zwiebeln und Salat), Rasen und Zierpflanzen. Besondere Bedeutung kommt der Behandlung des Saatguts von Getreide (wie Weizen, Gerste, Roggen und Hafer), Mais und Reis zu. Außerdem kommt der Behandlung des Saatgutes von Soja besondere Bedeutung zu.

Im Rahmen der vorliegenden Erfindung wird das erfindungsgemäßes Mittel alleine oder in einer geeigneten Formulierung auf das Saatgut aufgebracht. Vorzugsweise wird das Saatgut in einem Zustand behandelt, in dem so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde. So kann zum Beispiel Saatgut verwendet werden, das geerntet, gereinigt und bis zu einem Feuchtigkeitsgehalt von unter 15 Gew.-% getrocknet wurde. Alternativ kann auch Saatgut verwendet werden, das nach dem Trocknen z.B. mit Wasser behandelt und dann erneut getrocknet wurde.

Im Allgemeinen muss bei der Behandlung des Saatguts darauf geachtet werden, dass die Menge des auf das Saatgut aufgebrachten erfindungsgemäßen Mittels und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäßen Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die erfindungsgemäßen Wirkstoffkombinationen eignen sich auch zur Steigerung des Ernteertrages. Sie sind außerdem mindertoxisch und weisen eine gute Pflanzenverträglichkeit auf.

Erfindungsgemäß können alle Pflanzen und Pflanzenteile behandelt werden. Unter Pflanzen werden hierbei

alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile (einschließlich von Saatgut) mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen. Dabei können die Wirkstoffkombinationen vor der Behandlung durch Mischen der einzelnen Wirkstoffe herstellt werden und werden somit in Mischung verwendet. Oder die Behandlung erfolgt nacheinander durch Einsatz zunächst eines Herbizids der Gruppe (1) gefolgt von der Behandlung mit einem Wirkstoff der Gruppen (2) bis (23). Es ist jedoch auch möglich die Pflanzen oder Pflanzenteile (einschließlich von Saatgut) zunächst mit einem Wirkstoff der Gruppen (2) bis (23) zu behandeln und die Behandlung mit einem Herbizid der Gruppe (1) anzuschließen. Insbesondere ist es auch möglich, Saatgut zunächst mit einem oder mehreren Wirkstoffen der Gruppen (2) bis (23) ein- oder mehrschichtig zu umhüllen und die daraus erhaltenen Pflanzen erst nach Auflaufen einer Infektion mit einem Herbizid der Gruppe (1) zu besprühen (z.B. Saatgut von Sojabohne oder Mais wird zunächst mit Fluquinconazole oder Carboxin behandelt, worauf später eine Blattapplikation mit Glyphosate erfolgt; oder Saatgut von Raps wird zunächst mit mit Fluquinconazole oder Carboxin behandelt, worauf später eine Blattapplikation mit Glufosinate erfolgt).

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden, insbesondere Soja. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die erfindungsgemäßen Wirkstoffkombinationen können in Abhängigkeit von ihren jeweiligen physikalischen und/oder chemischen Eigenschaften in die üblichen Formulierungen überführt werden, wie Lösungen, Emulsionen, Suspensionen, Pulver, Stäubemittel, Schäume, Pasten, lösliche Pulver, Granulate, Aerosole, Suspensions-Emulsions-Konzentrate, Wirkstoff-imprägnierte Natur- und synthetische Stoffe sowie Feinstverkapselungen in polymeren Stoffen und in Hüllmassen für Saatgut, sowie ULV-Kalt- und Warmnebel-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im Wesentlichen infrage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser.

Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid.

Als feste Trägerstoffe kommen infrage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier- und/oder schaumerzeugende Mittel kommen infrage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen infrage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Der Wirkstoffgehalt der aus den handelsüblichen Formulierungen bereiteten Anwendungsformen kann in weiten Bereichen variieren. Die Wirkstoffkonzentration der Anwendungsformen zum Bekämpfen tierischer Schädlingen wie Insekten und Akariden kann von 0,0000001 bis zu 95 Gew.-% Wirkstoff, vorzugsweise zwischen 0,0001 und 1 Gew.-% liegen. Die Anwendung geschieht in einer den Anwendungsformen angepassten üblichen Weise.

Die Formulierungen zur Bekämpfung unerwünschter phytopathogener Pilze enthalten im Allgemeinen zwischen 0,1 und 95 Gew.-% Wirkstoffe, vorzugsweise zwischen 0,5 und 90 %.

Die erfindungsgemäßen Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver, Stäubemittel und Granulate, angewendet werden. Die Anwendung geschieht in üblicher Weise, z.B. durch Gießen (drenchen), Tröpfchenbewässerung, Verspritzen, Versprühen, Verstreuen, Verstäuben, Verschäumen, Bestreiche, Verstreichen, Trockenbeizen, Feuchtbeizen, Nassbeizen, Schlämmbeizen, Inkrustieren usw.

Die erfindungsgemäßen Wirkstoffkombinationen können in handelsüblichen Formulierungen sowie in den aus

diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 0,1 und 10 000 g/ha, vorzugsweise zwischen 1 und 5 000 g/ha.

Die Wirkstoffkombinationen können als solche, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen der Wirkstoffe mit mindestens einem Lösungs- bzw. Verdünnungsmittel, Emulgator, Dispergier- und/oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende fungizide Wirkung für eine gegebene Kombination zweier Wirkstoffe kann nach S.R. Colby ("Calculating Synergistic and Antagonistic Responses of Herbicide Combinations", Weeds 1967, 15, 20-22) wie folgt berechnet werden:

Wenn

X den *Wirkungsgrad* beim Einsatz des Wirkstoffes A in einer Aufwandmenge von *m g/ha* bedeutet,
Y den *Wirkungsgrad* beim Einsatz des Wirkstoffes B in einer Aufwandmenge von *n g/ha* bedeutet und
E den *Wirkungsgrad* beim Einsatz der Wirkstoffe A und B in Aufwandmengen von *m und n g/ha* bedeutet,

dann ist

$$E = X + Y - \frac{X \times Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für den erwarteten Wirkungsgrad (E).

Die Erfindung wird durch die folgenden Beispiele veranschaulicht. Die Erfindung ist jedoch nicht auf die Beispiele limitiert.

## Anwendungsbeispiele

Beispiel A: Phytophthora-Test (Tomate) / protektiv

| | | |
|---|---|---|
| Lösungsmittel: | 24,5 | Gewichtsteile Aceton |
| | 24,5 | Gewichtsteile Dimethylacetamid |
| Emulgator: | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte

Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Sporensuspension von Phytophthora infestans inokuliert. Die Pflanzen werden dann in einer Inkubationskabine bei ca. 20°C und 100% relativer Luftfeuchtigkeit aufgestellt. 3 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel B: Plasmopara-Test (Rebe) / protektiv

| | | |
|---|---|---|
| Lösungsmittel: | 24,5 | Gewichtsteile Aceton |
| | 24,5 | Gewichtsteile Dimethylacetamid |
| Emulgator: | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Sporensuspension von Plasmopara viticola inokuliert und verbleiben dann 1 Tag in einer Inkubationskabine bei ca. 20°C und 100% relativer Luftfeuchtigkeit. Anschließend werden die Pflanzen 4 Tage im Gewächshaus bei ca. 21°C und ca. 90% Luftfeuchtigkeit aufgestellt. Die Pflanzen werden dann angefeuchtet und 1 Tag in eine Inkubationskabine gestellt. 6 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel C: Podosphaera-Test (Apfel) / protektiv

| | | |
|---|---|---|
| Lösungsmittel: | 24,5 | Gewichtsteile Aceton |
| | 24,5 | Gewichtsteile Dimethylacetamid |
| Emulgator: | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Sporensuspension des Apfelmehltauerregers Podosphaera leucotricha inokuliert. Die Pflanzen werden dann im Gewächshaus bei ca. 23°C und einer relativen Luftfeuchtigkeit von ca. 70% aufgestellt. 10 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel D: Sphaerotheca-Test (Gurke) / protektiv

| | | |
|---|---|---|
| Lösungsmittel: | 24,5 | Gewichtsteile Aceton |
| | 24,5 | Gewichtsteile Dimethylacetamid |
| Emulgator: | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Sporensuspension von Sphaerotheca fuliginea inokuliert. Die Pflanzen werden dann bei ca. 23°C und einer relativen Luftfeuchtigkeit von ca. 70% im Gewächshaus aufgestellt. 7 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel E: Uncinula - Test (Rebe) / protektiv

| | | |
|---|---|---|
| Lösungsmittel: | 24,5 | Gewichtsteile Aceton |
| | 24,5 | Gewichtsteile Dimethylacetamid |
| Emulgator: | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Sporensuspension von Uncinula necator inokuliert. Die Pflanzen werden dann im Gewächshaus bei ca. 23°C und einer relativen Luftfeuchtigkeit von ca. 70% aufgestellt. 14 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel F: Uromyces-Test (Bohne) / protektiv

| | | |
|---|---|---|
| Lösungsmittel: | 24,5 | Gewichtsteile Aceton |
| | 24,5 | Gewichtsteile Dimethylacetamid |
| Emulgator: | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Sporensuspension des Rosterregers Uromyces appendiculatus inokuliert und verbleiben dann 1 Tag bei ca. 20°C und 100% relativer Luftfeuchtigkeit in einer Inkubationskabine. Die Pflanzen werden dann im Gewächshaus bei ca. 21°C und einer relativen Luftfeuchtigkeit von ca. 90% aufgestellt.

10 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel G: Phakopsora-Test (Soja)

Als zweckmäßige Wirkstoffzubereitungen werden handelsübliche Formulierungen verwendet, die gegebenenfalls vor Applikation auf die gewünschte Konzentration verdünnt werden.

Sojabohnen-Pflanzen (cv. Miyagishirome) wurden in einem Plastikgefäß mit 7,5 cm Durchmesser für 14 Tage kultiviert bis sie das 2,3 Blatt-Stadium erreicht haben. Die Wirkstoffzubereitungen wurden in der unten angegebenen Konzentration auf die Testpflanzen gesprüht (6 ml für je 3 Testgefäße, Testlösung enthielt 0,02% Neoesterin als Adhäsiv).

1 Tag nach Aufbringen der Wirkstoffzubereitung wurden die Pflanzen mit einer Urediniosporen-Suspension (1 x $10^5$ Urediniosporen/ml) des Rosterregers Phakopsora pachyrhizi besprüht. Die Pflanzen werden dann im Gewächshaus bei ca. 25°C tagsüber und ca. 18°C nachts und einer relativen Luftfeuchtigkeit von 91.9% aufgestellt.

11 Tage nach der Inokulation erfolgt die Auswertung durch Vergleich der infizierten Flächen von unbehandelten und behandelten Pflanzen. Dabei bedeutet 0% ein Wirkungsgrad, der demjenigen der Kontrolle entspricht, während ein

Wirkungsgrad von 100% bedeutet, daß kein Befall beobachtet wird.

Tabelle G

| Phakopsora-Test (Soja) | | | |
|---|---|---|---|
| Wirkstoffe | Aufwandmenge an Wirkstoff in ppm | Wirkungsgrad in % | |
| | | gef.* | ber.** |
| (1-1) Glyphosate | 0,5<br>5 | 0<br>0 | |
| (3-17) Tebuconazole | 0,5 | 50 | |
| (1-1) + (3-17) (1:1) | 0,5 + 0,5 | 96 | 50 |
| (1-1) + (3-17) (10:1) | 5 + 0,5 | 99 | 50 |
| (1-2) Glufosinate | 0,5<br>5 | 0<br>0 | |
| (3-17) Tebuconazole | 0,5 | 60 | |
| (1-2) + (3-17) (1:1) | 0,5 + 0,5 | 94 | 60 |
| (1-2) + (3-17) (10:1) | 5 + 0,5 | 95 | 60 |
| * gef. = gefundene Wirkung<br>** ber. = nach der Colby-Formel berechnete Wirkung | | | |

Beispiel H: Venturia - Test (Apfel) / protektiv

| | | |
|---|---|---|
| Lösungsmittel: | 24,5 | Gewichtsteile Aceton |
| | 24,5 | Gewichtsteile Dimethylacetamid |
| Emulgator: | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Konidiensuspension des Apfelschorferregers Venturia inaequalis inokuliert und verbleiben dann 1 Tag bei ca. 20°C und 100% relativer Luftfeuchtigkeit in einer Inkubationskabine. Die Pflanzen werden dann im Gewächshaus bei ca. 21°C und einer relativen Luftfeuchtigkeit von ca. 90% aufgestellt. 10 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel I: Alternaria-Test (Tomate) / protektiv

| | | |
|---|---|---|
| Lösungsmittel: | 24,5 | Gewichtsteile Aceton |
| | 24,5 | Gewichtsteile Dimethylacetamid |
| Emulgator: | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Sporensuspension von Alternaria solani inokuliert. Die Pflanzen werden dann in einer Inkubationskabine bei ca. 20°C und 100% relativer Luftfeuchtigkeit aufgestellt. 3 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel J: Botrytis - Test (Bohne) / protektiv

| | | |
|---|---|---|
| Lösungsmittel: | 24,5 | Gewichtsteile Aceton |
| | 24,5 | Gewichtsteile Dimethylacetamid |
| Emulgator: | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden auf jedes Blatt 2 kleine mit Botrytis cinerea bewachsene Agarstückchen aufgelegt. Die inokulierten Pflanzen werden in einer abgedunkelten Kammer bei ca. 20°C und 100% relativer Luftfeuchtigkeit aufgestellt.

2 Tage nach der Inokulation wird die Größe der Befallsflecken auf den Blättern ausgewertet. Dabei bedeutet 0% ein Wirkungsgrad, der demjenigen der Kontrolle entspricht, während ein Wirkungsgrad von 100% bedeutet, daß kein Befall beobachtet wird.

Beispiel K: Erysiphe-Test (Gerste) / protektiv

| | | |
|---|---|---|
| Lösungsmittel: | 50 | Gewichtsteile N,N-Dimethylacetamid |
| Emulgator: | 1 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung in der angegebenen Aufwandmenge. Nach Antrocknen des Spritzbelages werden die Pflanzen mit Sporen von Erysiphe graminis f.sp. hordei bestäubt. Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen. 7 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel L: Erysiphe-Test (Weizen) / protektiv

| | | |
|---|---|---|
| Lösungsmittel: | 50 | Gewichtsteile N,N-Dimethylacetamid |
| Emulgator: | 1 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung in der angegebenen Aufwandmenge. Nach Antrocknen des Spritzbelages werden die Pflanzen mit Sporen von Erysiphe graminis f.sp. tritici bestäubt. Die Pflanzen werden in einem Gewächshaus bei einer Temperatur von ca. 20°C und einer relativen Luftfeuchtigkeit von ca. 80% aufgestellt, um die Entwicklung von Mehltaupusteln zu begünstigen. 7 Tage nach der Inokulation erfolgt die Auswertung. Dabei bedeutet 0% ein Wirkungsgrad, der demjenigen der Kontrolle entspricht,

während ein Wirkungsgrad von 100% bedeutet, daß kein Befall beobachtet wird.

Beispiel M: Fusarium culmorum-Test (Weizen) / protektiv

| | | |
|---|---|---|
| Lösungsmittel: | 50 | Gewichtsteile N,N-Dimethylacetamid |
| Emulgator: | 1 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung in der angegebenen Aufwandmenge. Nach Antrocknen des Spritzbelages werden die Pflanzen mit einer Konidiensuspension von Fusarium culmorum besprüht. Die Pflanzen werden in einem Gewächshaus unter lichtdurchlässigen Inkubationshauben bei einer Temperatur von ca. 20°C und einer relativen Luftfeuchtigkeit von ca. 100% aufgestellt. 4 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel N: Fusarium nivale (var. majus)-Test (Weizen) / protektiv

| | | |
|---|---|---|
| Lösungsmittel: | 50 | Gewichtsteile N,N-Dimethylacetamid |
| Emulgator: | 1 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer Konidiensuspension von Fusarium nivale (var. majus) besprüht.

Die Pflanzen werden in einem Gewächshaus unter lichtdurchlässigen Inkubationshauben bei einer Temperatur von ca. 15°C und einer relativen Luftfeuchtigkeit von ca. 100 % aufgestellt. 4 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel O: Fusarium graminearum-Test (Gerste) / protektiv

| | | |
|---|---|---|
| Lösungsmittel: | 50 | Gewichtsteile N,N-Dimethylacetamid |
| Emulgator: | 1 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer Konidiensuspension von Fusarium graminearum besprüht.

Die Pflanzen werden in einem Gewächshaus unter lichtdurchlässigen Inkubationshauben bei einer Temperatur von ca. 15°C und einer relativen Luftfeuchtigkeit von 100% aufgestellt. 4 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel P: Leptosphaeria nodorum-Test (Weizen) / protektiv

| | | |
|---|---|---|
| Lösungsmittel: | 50 | Gewichtsteile N,N-Dimethylacetamid |
| Emulgator: | 1 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer Sporensuspension von Leptosphaeria nodorum besprüht. Die Pflanzen verbleiben 48 Stunden bei 20°C und 100 % relativer Luftfeuchtigkeit in einer Inkubationskabine.

Die Pflanzen werden in einem Gewächshaus bei einer Temperatur von ca. 15°C und einer relativen Luftfeuchtigkeit von 80% aufgestellt. 10 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel Q: Pseudocercosporella herpotrichoides-Test; R-Stamm (Weizen) / protektiv

| | | |
|---|---|---|
| Lösungsmittel: | 50 | Gewichtsteile N,N-Dimethylacetamid |
| Emulgator: | 1 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen an der Halmbasis mit Sporen des R-Stammes von Pseudocercosporella herpotrichoides inokuliert.

Die Pflanzen werden in einem Gewächshaus bei einer Temperatur von ca. 10°C und einer relativen Luftfeuchtigkeit von 80% aufgestellt. 21 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel R: Pseudocercosporella herpotrichoides-Test; W-Stamm (Weizen) / protektiv

| | | |
|---|---|---|
| Lösungsmittel: | 50 | Gewichtsteile N,N-Dimethylacetamid |
| Emulgator: | 1 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen an der Halmbasis mit Sporen des W-Stammes von Pseudocercosporella herpotrichoides inokuliert.

Die Pflanzen werden in einem Gewächshaus bei einer Temperatur von ca. 10°C und einer relativen Luftfeuchtigkeit von 80% aufgestellt.

21 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Beispiel S: Puccinia-Test (Weizen) / protektiv

| | | |
|---|---|---|
| Lösungsmittel: | 50 | Gewichtsteile N,N-Dimethylacetamid |
| Emulgator: | 1 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer Konidiensuspension von Puccinia recondita besprüht. Die Pflanzen verbleiben 48 Stunden bei 20 C und 100% relativer Luftfeuchtigkeit in einer Inikubationskabine.

Die Pflanzen werden dann in einem Gewächshaus bei einer Temperatur von ca. 20 C und einer relativen Luftfeuchtigkeit von 80% aufgestellt, um die Entwicklung von Rostpusteln zu begünstigen. 10 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

<u>Beispiel T: Pyrenophora teres-Test (Gerste) / protektiv</u>

| | | |
|---|---|---|
| Lösungsmittel: | 50 | Gewichtsteile N,N-Dimethylacetamid |
| Emulgator: | 1 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegeben Aufwandmenge besprüht. Nach Antrocknen des Spritzbelages werden die Pflanzen mit einer Konidiensuspension von Pyrenophora teres besprüht. Die Pflanzen verbleiben 48 Stunden bei 20°C und 100 % relativer Luftfeuchtigkeit in einer hikubationskabine.

Die Pflanzen werden dann in einem Gewächshaus bei einer Temperatur von ca. 20°C und relativen Luftfeuchtigkeit von ca. 80% aufgestellt. 7 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

## Patentansprüche

**1.** Wirkstoffkombinationen, enthaltend
<u>Gruppe (1) ein Herbizid ausgewählt aus</u>

(1-2) Glufosinate
(1-3) Glufosinate-ammonium
(1-1) Glyphosate

und dem Wirkstoff

(19-16) Isoprothiolane.

**2.** Wirkstoffkombinationen gemäß Anspruch 1, enthaltend (1-2) Glufosinate.

**3.** Wirkstoffkombinationen gemäß Anspruch 1, enthaltend (1-3) Glufosinate-ammonium.

**4.** Verwendung von Wirkstoffkombinationen gemäß Anspruch 1, 2 oder 3 zur Bekämpfung von unerwünschten phytopathogenen Pilzen.

**5.** Verwendung von Wirkstoffkombinationen gemäß Anspruch 1, 2 oder 3 zur Behandlung von transgenen Pflanzen.

6. Verwendung gemäß Anspruch 5, **dadurch gekennzeichnet, dass** die behandelten transgenen Pflanzen gegen Glyphosate, Glufosinate oder Glufosinate-ammonium resistent sind.

7. Verfahren zum Bekämpfen von unerwünschten phytopathogenen Pilzen, **dadurch gekennzeichnet, dass** man Wirkstoffkombinationen gemäß Anspruch 1, 2 oder 3 auf die unerwünschten phytopathogenen Pilze und/oder deren Lebensraum und/oder Saatgut ausbringt.

8. Verwendung von Wirkstoffkombinationen gemäß Anspruch 1, 2 oder 3 zur Bekämpfung von Rost-Krankheiten an Soja-Pflanzen.

9. Verwendung von Wirkstoffkombinationen gemäß Anspruch 1, 2 oder 3 zur Behandlung von transgenen Soja-Pflanzen.

10. Verwendung gemäß Anspruch 9, **dadurch gekennzeichnet, dass** die behandelten transgenen Soja-Pflanzen gegen Glyphosate, Glufosinate oder Glufosinate-ammonium, bevorzugt Glyphosate, resistent sind.

11. Verfahren zum Bekämpfen von unerwünschten phytopathogenen Pilzen, **dadurch gekennzeichnet, dass** man Wirkstoffkombinationen gemäß Anspruch 1, 2 oder 3 auf die Rost-Pilze und/oder deren Lebensraum und/oder Saatgut ausbringt.

12. Beizmittel enthaltend eine Wirkstoffkombination gemäß Anspruch 1, 2 oder 3.

13. Verwendung von Wirkstoffkombinationen gemäß Anspruch 1, 2 oder 3 zur Behandlung von Saatgut und/oder zur Behandlung von Saatgut transgener Pflanzen.

14. Verfahren zum Beizen von Saatgut, **dadurch gekennzeichnet, dass** man eine Wirkstoffkombination gemäß Anspruch 1, 2 oder 3 auf das Saatgut oder das Saatgut transgener Pflanzen aufbringt.

15. Verwendung von Wirkstoffkombinationen gemäß Anspruch 1, 2 oder 3 zur Behandlung von herbizid-resistenten oder herbizid-sensitiven Pflanzen.

Europäisches Patentamt
European Patent Office
Office européen des brevets

# EUROPÄISCHER RECHERCHENBERICHT

Nummer der Anmeldung
EP 10 16 9148

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | WO 2006/128095 A2 (MONSANTO TECHNOLOGY LLC [US]; BALEY GEORGE JAMIE [US]; KOHN FRANK C [U) 30. November 2006 (2006-11-30)<br>* Seite 1, Zeilen 8-11 *<br>* Seite 3, Zeilen 8-23 *<br>* Seite 5, Zeilen 14-21 *<br>* Seite 7, Zeile 5 - Seite 8, Zeile 5 *<br>* Ansprüche 1, 9, 10 *<br>----- | 1,4-15 | INV.<br>A01N57/20<br>A01N43/28<br>A01P3/00 |
| X | WO 2005/041653 A2 (BAYER CROPSCIENCE AG [DE]; WACHENDORFF-NEUMANN ULRIKE [DE]; DAHMEN PET) 12. Mai 2005 (2005-05-12)<br>* Seite 1, Zeile 20 - Seite 2, Zeile 16 *<br>* Seite 8, Zeile 2 *<br>* Seite 10, Zeilen 13-15 *<br>----- | 1-15 | |
| A | EP 0 431 545 A2 (HOECHST AG [DE])<br>12. Juni 1991 (1991-06-12)<br>* Seite 2, Zeile 39 - Seite 3, Zeile 5 *<br>* Seite 5, Zeilen 35-48 *<br>----- | 1-15 | RECHERCHIERTE SACHGEBIETE (IPC) |
| A | DE 100 59 609 A1 (BAYER AG [DE])<br>6. Juni 2002 (2002-06-06)<br>* Absätze [0004], [00 5], [0 23] - [0025] *<br>----- | 1-15 | A01N |
| A | EP 0 945 065 A1 (SANKYO CO [JP])<br>29. September 1999 (1999-09-29)<br>* Absätze [0006], [00 7], [0 10], [0 33] *<br>----- | 1-15 | |
| A | GB 2 313 595 A (CIBA GEIGY AG [CH])<br>3. Dezember 1997 (1997-12-03)<br>* Seite 1, Absätze 3, 4 *<br>* Seite 5, Absatz 6 *<br>----- | 1-15 | |

Der vorliegende Recherchenbericht wurde für alle Patentansprüche erstellt

| Recherchenort | Abschlußdatum der Recherche | Prüfer |
|---|---|---|
| Den Haag | 8. Dezember 2010 | Lamers, Wolfram |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

1

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 10 16 9148

In diesem Anhang sind die Mitglieder der Patentfamilien der im obengenannnten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-12-2010

| Im Recherchenbericht angeführtes Patentdokument | Datum der Veröffentlichung | Mitglied(er) der Patentfamilie | Datum der Veröffentlichung |
|---|---|---|---|
| WO 2006128095 A2 | 30-11-2006 | AR 053496 A1 | 09-05-2007 |
| | | AR 054052 A1 | 30-05-2007 |
| | | AR 053497 A1 | 09-05-2007 |
| | | AU 2006252680 A1 | 07-12-2006 |
| | | BR PI0610051 A2 | 25-05-2010 |
| | | BR PI0610088 A2 | 09-12-2008 |
| | | BR PI0610654 A2 | 13-07-2010 |
| | | CA 2609418 A1 | 07-12-2006 |
| | | CA 2609777 A1 | 07-12-2006 |
| | | CA 2609854 A1 | 30-11-2006 |
| | | CN 101252831 A | 27-08-2008 |
| | | CN 101253268 A | 27-08-2008 |
| | | CN 101316513 A | 03-12-2008 |
| | | EP 1885861 A2 | 13-02-2008 |
| | | EP 1885176 A2 | 13-02-2008 |
| | | EP 1883303 A2 | 06-02-2008 |
| | | JP 2008545413 T | 18-12-2008 |
| | | KR 20080050548 A | 09-06-2008 |
| | | NZ 563718 A | 30-07-2010 |
| | | WO 2006130436 A2 | 07-12-2006 |
| | | WO 2006130494 A2 | 07-12-2006 |
| | | UY 29570 A1 | 29-12-2006 |
| | | ZA 200710175 A | 29-10-2008 |
| | | ZA 200710177 A | 29-10-2008 |
| WO 2005041653 A2 | 12-05-2005 | AR 046144 A1 | 23-11-2005 |
| | | AU 2004285267 A1 | 12-05-2005 |
| | | BR PI0415758 A | 19-12-2006 |
| | | CA 2543053 A1 | 12-05-2005 |
| | | CN 1870895 A | 29-11-2006 |
| | | CN 101785462 A | 28-07-2010 |
| | | DE 10349501 A1 | 25-05-2005 |
| | | EP 1677598 A2 | 12-07-2006 |
| | | JP 2007509088 T | 12-04-2007 |
| | | KR 20060123146 A | 01-12-2006 |
| | | MX PA06004309 A | 05-06-2006 |
| | | NZ 546725 A | 26-03-2010 |
| | | US 2009018015 A1 | 15-01-2009 |
| | | ZA 200603104 A | 25-07-2007 |
| EP 0431545 A2 | 12-06-1991 | DE 3940573 A1 | 13-06-1991 |
| DE 10059609 A1 | 06-06-2002 | KEINE | |
| EP 0945065 A1 | 29-09-1999 | AU 720178 B2 | 25-05-2000 |
| | | AU 4884097 A | 29-05-1998 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT ÜBER DIE EUROPÄISCHE PATENTANMELDUNG NR.** EP 10 16 9148

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-12-2010

| Im Recherchenbericht angeführtes Patentdokument | Datum der Veröffentlichung | Mitglied(er) der Patentfamilie | Datum der Veröffentlichung |
|---|---|---|---|
| EP 0945065 A1 | | BR 9712887 A | 01-02-2000 |
| | | CA 2271105 A1 | 14-05-1998 |
| | | CN 1244096 A | 09-02-2000 |
| | | DE 69720768 D1 | 15-05-2003 |
| | | WO 9819544 A1 | 14-05-1998 |
| | | KR 20000053110 A | 25-08-2000 |
| | | RU 2174753 C2 | 20-10-2001 |
| | | TW 453855 B | 11-09-2001 |
| | | US 6200929 B1 | 13-03-2001 |
| GB 2313595 A | 03-12-1997 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2152826 A
- DE 2717440 A
- WO 03010149 A
- DE 10303589 A
- EP 0040345 A
- DE 2201063 A
- DE 2324010 A
- EP 0382375 A
- EP 0515901 A
- WO 9706171 A
- DE 19646407 A
- EP 712396 B
- DE 19602095 A
- EP 0460575 A
- EP 0569384 A
- EP 0596254 A
- DE 19539324 A
- WO 9823155 A
- EP 0253213 A
- EP 0398692 A
- EP 0278595 A
- DE 4423612 A
- WO 0112585 A
- EP 0936213 A
- DE 2551560 A
- EP 0112284 A
- EP 0258161 A
- DE 3406993 A
- DE 3042303 A
- DE 2735872 A
- EP 0145294 A
- EP 0234242 A
- EP 0015756 A
- EP 0196038 A
- EP 0068813 A
- EP 0537957 A
- WO 9616048 A
- DE 3721786 A
- EP 0329397 A
- EP 0378953 A
- EP 0183458 A
- JP 2001187786 A
- DE 1193498 A
- WO 00659513 A
- DE 4026966 A
- WO 9604252 A
- JP 10251240 A
- WO 2004067515 A
- WO 2004005242 A
- EP 0256503 A
- DE 19531813 A
- EP 0315502 A
- EP 0737682 A
- WO 0238542 A
- WO 03070705 A
- WO 0208197 A
- WO 0014701 A
- WO 03066609 A
- WO 03066610 A
- EP 0639574 A
- EP 0339418 A
- EP 0341475 A
- EP 0600629 A
- WO 9942447 A
- EP 0604019 A
- WO 9924413 A
- US 3249499 A
- US 6616054 B
- WO 9618631 A
- WO 2004016088 A
- WO 2006015865 A
- WO 2005123690 A
- WO 2005123689 A
- DE 1234704 A
- US 2504404 A
- DE 1076434 A
- GB 935981 A
- US 1972961 A
- DE 1081446 A
- US 2588428 A
- DE 2903612 A
- DE 2513732 A
- DE 2515091 A
- WO 9601559 A
- EP 0310550 A
- EP 0270111 A
- DD 151404
- US 3631176 A
- US 3010968 A
- DE 1209799 A
- US 3206468 A
- EP 0078663 A
- US 3513241 A
- US 3178447 A
- US 2553770 A
- DE 2149923 A
- DE 2012656 A
- DE 2207576 A

- GB 1103989 A
- GB 1114155 A
- EP 0155509 A
- EP 0298196 A
- DE 2429523 A
- DE 2802488 A
- EP 0248086 A
- DD 140041
- GB 988630 A
- DE 2543279 A
- DE 2656747 A
- EP 0219756 A
- EP 0086438 A
- EP 0236272 A
- EP 0206999 A
- JP 6525876 A
- DE 2456627 A
- WO 9623793 A
- EP 0313512 A
- US 3290353 A
- DE 2312956 A
- DE 1493736 A
- EP 0393911 A
- EP 0031257 A
- DE 3030026 A
- DE 3735555 A
- JP 4429464 A
- EP 0897904 A
- EP 0629616 A
- WO 9914202 A
- US 3629428 A
- US 3856814 A
- GB 1094567 A
- JP 57055844 A
- EP 0019450 A
- DE 2250077 A
- WO 0187822 A
- WO 09426722 A
- EP 0326330 A
- WO 9619442 A
- WO 0110825 A
- EP 1035122 A
- DE 2732257 A
- DE 1806123 A
- EP 0262393 A
- JP 7206608 A
- US 5986135 A
- WO 0238565 A
- US 5593996 A
- DE 10124208 A
- WO 03014103 A
- US 4272417 A
- US 4245432 A
- US 4808430 A
- US 5876739 A
- US 20030176428 A1
- WO 2002080675 A1
- WO 2002028186 A2


**In der Beschreibung aufgeführte Nicht-Patentliteratur**


- Pesticide Manual. British Crop Protection Council, 2003, 511-512
- **S.R. Colby.** Calculating Synergistic and Antagonistic Responses of Herbicide Combinations. *Weeds,* 1967, vol. 15, 20-22